(19) Europäisches Patentamt
European Patent Office
Office européen des brevets

(11) EP 4 648 012 A1

(12) **EUROPEAN PATENT APPLICATION**
published in accordance with Art. 153(4) EPC

(43) Date of publication:
**12.11.2025 Bulletin 2025/46**

(21) Application number: **24825031.8**

(22) Date of filing: **13.05.2024**

(51) International Patent Classification (IPC):
**G06T 11/00** (2006.01)  **G06V 10/74** (2022.01)

(52) Cooperative Patent Classification (CPC):
**G06N 3/0464; G06N 3/0475; G06N 3/094;**
**G06T 11/00; G06V 10/74; G06V 40/12**

(86) International application number:
**PCT/CN2024/092752**

(87) International publication number:
**WO 2024/260134 (26.12.2024 Gazette 2024/52)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **20.06.2023 CN 202310744612**

(71) Applicant: **Tencent Technology (Shenzhen)**
**Company Limited**
**Shenzhen, Guangdong 518057 (CN)**

(72) Inventors:
• **SHEN, Lei**
**Shenzhen, Guangdong 518057 (CN)**
• **ZHANG, Ruixin**
**Shenzhen, Guangdong 518057 (CN)**
• **DING, Shouhong**
**Shenzhen, Guangdong 518057 (CN)**

(74) Representative: **EP&C**
**P.O. Box 3241**
**2280 GE Rijswijk (NL)**

(54) **PALMPRINT PICTURE GENERATION METHOD AND APPARATUS, STORAGE MEDIUM, PROGRAM PRODUCT, AND ELECTRONIC DEVICE**

(57) Disclosed in embodiments of the present application are a palmprint picture generation method and apparatus, a storage medium, a program product, and an electronic device. The method comprises: acquiring a simulated palmprint picture, wherein the simulated palmprint picture comprises a simulated palmprint curve obtained by combining curves of a target type; and inputting the simulated palmprint picture and a preset first noise vector into a trained target palmprint picture generator, and, by means of the target palmprint picture generator, sequentially performing multiple down-sampling operations and multiple up-sampling operations on the simulated palmprint picture to generate a target palmprint picture.

FIG. 3

**Description**

RELATED APPLICATION

The present disclosure claims priority to Chinese Patent Application No. 2023107446120, filed with the China National Intellectual Property Administration on June 20, 2023 and entitled "PALMPRINT PICTURE GENERATION METHOD AND APPARATUS, STORAGE MEDIUM, AND ELECTRONIC DEVICE".

FIELD OF THE TECHNOLOGY

The present disclosure relates to the field of computers and communication technologies, and in particular, to a palmprint picture generation method and apparatus, a storage medium, a program product, and an electronic device.

BACKGROUND OF THE DISCLOSURE

Palmprint recognition is a new generation of biometric recognition technology following fingerprint recognition and face recognition. Compared with the fingerprint recognition technology and the face recognition technology, palmprint is more conducive to protecting user privacy. Palmprint recognition involves fields including mobile payment, identity authentication, and the like, which are closely related to personal privacy and property security of users. Therefore, accuracy of recognition is extremely important.

At present, a to-be-trained palmprint picture matching model may be trained through a palmprint sample picture. However, during actual use, due to a difference in light of a picture collection device or a collection environment, collected palmprint pictures usually have different modalities, such as an infrared modality and a visible light modality. Therefore, the palmprint picture matching model may have errors in recognizing palmprint pictures of different modalities.

To minimize the recognition error, in a training stage, a large number of palmprint sample pictures of different modalities with the same palmprint line need to be used for training, so that the training process of the palmprint picture matching model is extremely dependent on the scale and diversity of the palmprint sample pictures. However, due to privacy of palm print, palmprint pictures are difficult to obtain, and multi-modal palmprint pictures that satisfy the foregoing conditions are scarcer. Therefore, due to relatively low generation efficiency of a palmprint picture, the scale and diversity of the palmprint sample pictures in the training process of the palmprint picture matching model are insufficient, which causes a trained palmprint picture matching model to have poor recognition ability for the multi-modal palmprint pictures.

For the foregoing problems, no effective solution has been proposed yet.

SUMMARY

Embodiments of the present disclosure provide a palmprint picture generation method and apparatus, a storage medium, a program product, and an electronic device, to at least resolve a technical problem of relatively low generation efficiency of a palmprint picture.

According to an aspect of the embodiments of the present disclosure, a palmprint picture generation method is provided, including:

obtaining a simulated palmprint picture, the simulated palmprint picture comprising a simulated palmprint curve obtained by combining sub-curves each of a pre-defined type;

inputting the simulated palmprint picture and a pre-set noise vector into a trained palmprint picture generator to sequentially perform a plurality of downsampling operations and a plurality of upsampling operations, to generate a target palmprint picture, wherein

the plurality of downsampling operations each comprise: a downsampling processing on an input picture representation vector to obtain a downsampled picture representation vector, followed by a noise addition processing on the downsampled picture representation vector by using the pre-set noise vector, to obtain an output picture representation vector; and

the plurality of upsampling operations each comprise: an upsampling processing on an input picture representation vector to obtain an upsampled picture representation vector, and followed by a noise addition processing on the upsampled picture representation vector by using the pre-set noise vector, to obtain an output picture representation vector.

According to another aspect of the embodiments of the present disclosure, a palmprint picture generation apparatus is further provided, including:

an obtaining unit, configured to obtain a simulated palmprint picture, the simulated palmprint picture comprising a simulated palmprint curve obtained by combining sub-curves each of a pre-defined type;
an input unit, configured to input the simulated palmprint picture and a pre-set noise vector into a trained palmprint picture generator to sequentially perform a plurality of downsampling operations and a plurality of upsampling operations, to generate a target palmprint picture, wherein

the plurality of downsampling operations each comprise: a downsampling processing on an input picture representation vector to obtain a downsampled picture representation vector, followed by a noise addition processing on the downsampled picture representation vector by using the pre-set noise vector, to obtain an output picture representation vector; and

the plurality of upsampling operations each comprise: an upsampling processing on an input picture representation vector to obtain an upsampled picture representation vector, and followed by a noise addition processing on the upsampled picture representation vector by using the pre-set noise vector, to obtain an output picture representation vector.

According to still another aspect of the embodiments of the present disclosure, a computer-readable storage medium is further provided, the computer-readable storage medium having a computer program stored therein, the computer program being configured for performing the foregoing palmprint picture generation method when being run.
According to yet another aspect of the embodiments of the present disclosure, a computer program product or a computer program is provided, the computer program product or the computer program including a computer instruction, the computer instruction being stored in a computer-readable storage medium. A processor of a computer device reads the computer instruction from the computer-readable storage medium. The processor executes the computer instruction, causing the computer device to perform the palmprint picture generation method described above.
According to still yet another aspect of the embodiments of the present disclosure, an electronic device is further provided, including a memory and a processor, the memory having a computer program stored therein, and the foregoing processor being configured to perform the foregoing palmprint picture generation method through the computer program.

BRIEF DESCRIPTION OF THE DRAWINGS

The accompanying drawings described herein are used to provide a further understanding of the present disclosure, and constitute a part of the present disclosure. Exemplary embodiments of the present disclosure and descriptions thereof are used to explain the present disclosure, and do not constitute any inappropriate limitation on the present disclosure. In the accompanying drawings:

FIG. 1 is an optional flowchart of palmprint recognition according to an embodiment of the present disclosure.

FIG. 2 is a schematic diagram of an application environment of an optional palmprint picture generation method according to an embodiment of the present disclosure.

FIG. 3 is a flowchart of an optional palmprint picture generation method according to an embodiment of the present disclosure.

FIG. 4 is a schematic diagram of an optional picture representation vector according to an embodiment of the present disclosure.

FIG. 5 is schematic diagram of generation of an optional $i^{th}$ noise-added picture representation vector according to an embodiment of the present disclosure.

FIG. 6 is a schematic diagram of performing noise addition processing on a picture representation vector by a conditional generation submodule in an optional $i^{th}$ downsampling module according to an embodiment of the present disclosure.

FIG. 7 is a schematic structural diagram of an optional conditional generation submodule according to an embodiment of the present disclosure.

FIG. 8 is a schematic diagram of generation of an optional $j^{th}$ noise-added picture representation vector according to an embodiment of the present disclosure.

FIG. 9 is a schematic diagram of performing noise addition processing on a picture representation vector by a conditional generation submodule in an optional $j^{th}$ downsampling module according to an embodiment of the present disclosure.

FIG. 10 is a schematic diagram of an optional first convolution processing and second convolution processing according to an embodiment of the present disclosure.

FIG. 11 is a schematic diagram of a training process of an initial palmprint picture generator according to an embodiment of the present disclosure.

FIG. 12 is a schematic diagram of determining a target loss value through an optional first loss value according to an embodiment of the present disclosure.

FIG. 13 is a schematic diagram of determining a target loss value through an optional first loss value and second loss value according to an embodiment of the present disclosure.

FIG. 14 is a schematic diagram of determining a target loss value through an optional first loss value, second loss value, and third loss value according to an embodiment of the present disclosure.

FIG. 15 is a schematic diagram of determining a target loss value through an optional first loss value, second loss value, third loss value, and fourth loss value according to an embodiment of the present disclosure.

FIG. 16 is a schematic diagram of determining a target loss value through an optional first loss value, second loss value, third loss value, fourth loss value, and fifth loss value according to an embodiment of the present disclosure.

FIG. 17 is a schematic diagram of an overall block diagram of an optional palmprint picture generation algorithm according to an embodiment of the present disclosure.

FIG. 18 is a schematic structural diagram of an optional target palmprint picture generator according to an embodiment of the present disclosure.

FIG. 19 is a schematic structural diagram of an optional encoder according to an embodiment of the present disclosure.

FIG. 20 is a schematic diagram of an optional generated target palmprint picture according to an embodiment of the present disclosure.

FIG. 21 is a structural block diagram of a palmprint picture generation apparatus according to an embodiment of the present disclosure.

FIG. 22 is a schematic structural diagram of an optional electronic device according to an embodiment of the present disclosure.

FIG. 23 is a structural block diagram of a computer system of an optional electronic device according to an embodiment of the present disclosure.

DESCRIPTION OF EMBODIMENTS

To enable a person skilled in the art to better under the solutions of the present disclosure, the following clearly and completely describes the technical solutions in embodiments of the present disclosure with reference to the accompanying drawings in the embodiments of the present disclosure.

First, some terms in all embodiments of the present disclosure are explained as follows:

ROI is an abbreviation for region of interest.

LReLU: It is a type of activation function, and is an abbreviation for leaky rectified linear unit. It is similar to a conventional ReLU, but the difference is that when an input x is less than 0, LReLU will have a small slope instead of an output of 0, which may improve a model training effect in some cases.

Flatten: It is a function for flattening a multidimensional array into a one-dimensional array, and used in a neural network. In a deep learning model, a Flatten layer is usually configured for flattening input data into a single vector for further processing.

BN, an abbreviation for batch normalization, is a widely used neural network layer, and can accelerate a training process and improve model accuracy.

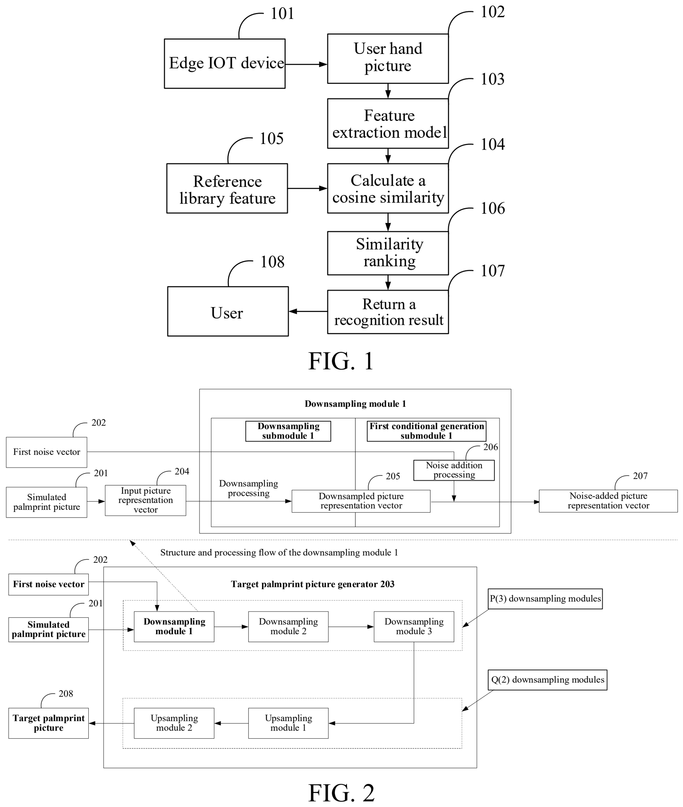

Generation of a palmprint picture may be applied to the palmprint recognition technology. Palmprint recognition scenes using the palmprint recognition technology are briefly described below. As shown in FIG. 1, a palmprint recognition scene may include the following operations:

1) collecting a user hand picture 102 through a terminal device (for example, an edge Internet of Things (IOT) device 101, including a terminal payment device and an identity (ID) collection device), which may specifically be a palm picture of a user, and extracting an ROI;

2) inputting the user hand picture 102 into a feature extraction model 103 (which may be understood as the foregoing palmprint picture matching model) to obtain a hand feature, for example, a feature vector of a palm; and

3) calculating a cosine similarity 104 between the user hand feature and a reference library feature 105, sorting similarities 106, and using ID information corresponding to the reference library feature (such as a reference library photo) with the highest similarity as a recognition result, and returning the recognition result 107 to the user 108, the foregoing reference library feature being a feature corresponding to a palm picture pre-stored by the user for representing user ID, which may mean that one user corresponds to a unique set of reference library features.

Based on the foregoing process, it may be seen that the ability of the feature extraction model to extract the user hand picture is to directly determine the accuracy of the recognition result. In an actual palmprint recognition scene, different types of terminal devices lead to a difference in modalities of collected user hand pictures, so that the feature extraction model may accurately extract user hand pictures of various modalities. Therefore, in the training stage of the feature extraction model, a large number of palmprint sample pictures of different modalities with the same palmprint line need to be used for training. However, the palmprint sample pictures with the foregoing conditions are difficult to obtain due to privacy of palmprint. In the related art, a sample volume obtained by artificially collecting palmprint of a real person is relatively small, and multi-modal palmprint pictures are scarcer, which causes the trained palmprint picture matching model to have poor recognition ability for the multi-modal palmprint pictures.

The related information (including but not limited to user device information, user personal information, and the like) and data (including but not limited to data for display and data for analysis) involved in the present disclosure are all authorized by the user or information and data fully authorized by all parties. For example, an interface is arranged between this system and a relevant user or institution. Before relevant information is obtained, an obtaining request needs to be transmitted to the foregoing user or institution through the interface, and the relevant information is obtained after consent information fed back by the foregoing users or institution is received.

According to an aspect of the embodiments of the present disclosure, a palmprint picture generation method is provided. In some embodiments, as an optional implementation, the foregoing palmprint picture generation method may be, but is not limited to, applied to a terminal device, a server, or the like, which may be, but is not limited to, an example in which the palmprint picture generation method is applied to a terminal device is used for explanation and description.

In all embodiments of the present disclosure, a pre-set noise vector in the palmprint picture generation method can be regarded as a first noise vector, and an intermediate noise vector when training the palmprint picture generator can be regarded as a second noise vector.

As shown in FIG. 2, the palmprint picture generation method is described by using a value of P being 3 and a value of Q being 2 as an example.

First, a simulated palmprint picture 201 is obtained, the simulated palmprint picture 201 including a simulated palmprint curve obtained by combining sub-curves each of a pre-defined type.

The simulated palmprint picture 201 and a pre-set noise vector 202 are input into a target (trained) palmprint picture generator 203, the target palmprint picture generator 203 being configured to pass the simulated palmprint picture through P(3) downsampling modules (a downsampling module 1, a downsampling module 2, and a downsampling module 3) in sequence and Q(2) upsampling modules (an upsampling module 1 and an upsampling module 2).

The downsampling operation in the target palmprint picture generator 203 may be performed through the downsampling module, and the upsampling operation in the target palmprint picture generator may be performed through the upsampling module. The downsampling processing may be performed through a downsampling submodule, and the upsampling processing may be performed through an upsampling submodule. The conditional generation submodule may perform noise addition processing on a sampled (downsampled or upsampled) picture representation vector through the noise vector, to obtain a noise-added picture representation vector as an output picture representation vector.

Each of the P(3) downsampling modules includes a downsampling submodule and a first conditional generation submodule. The downsampling module 1 is used as an example. The downsampling submodule 1 is configured to downsample an input picture representation vector 204 to obtain a downsampled picture representation vector 205. A first conditional generation submodule 1 is configured to perform noise addition processing 206 on the downsampled picture representation vector 205 through the first noise vector 202, to obtain a noise-added picture representation vector 207.

Each of the Q(2) upsampling modules (an upsampling module 1 and an upsampling module 2) includes an upsampling submodule and a second conditional generation submodule. The upsampling submodule is configured to upsample an input picture representation vector to obtain an upsampled picture representation vector. The second conditional generation submodule is configured to perform the noise addition processing on the upsampled picture representation vector through the noise vector, to obtain a noise-added picture representation vector.

The flow order of data (picture representation vectors) in the target palmprint picture generator is successively the downsampling module 1, the downsampling module 2, the downsampling module 3, the upsampling module 1, and the upsampling module 2, and finally a target palmprint picture 208 is obtained. The noise-added picture representation vector output by the previous sampling module (a downsampling module or an upsampling module) is the input picture representation vector for the next sampling module, and an input of the downsampling module 1 is a denoised picture representation vector, i.e., an initial picture representation vector.

In all embodiments of the present disclosure, the foregoing terminal device may be a terminal device configured with a target client, which may include but is not limited to at least one of the following: a mobile phone (such as an Android mobile phone and an iOS mobile phone), a notebook computer, a tablet computer, a palmtop, a mobile Internet device (MID), a PAD, a desktop computer, and a smart television. The target client may be a video client, an instant messaging client, a browser client, an education client, and the like. The foregoing network may include but is not limited to a wired network and a wireless network. The wired network includes a local area network, a metropolitan area network, and a wide area network. The wireless network includes Bluetooth, Wi-Fi, and another network that implements wireless communication. The foregoing server may be a single server, or may be a server cluster composed of a plurality of servers, or a cloud server. The foregoing is merely an example, which is not limited in this embodiment.

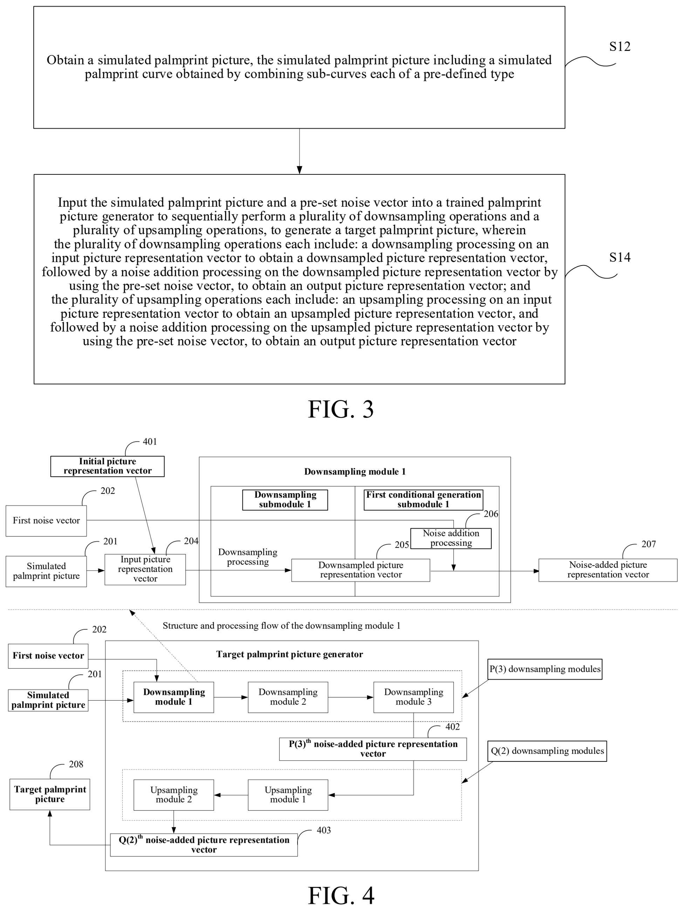

In all embodiments of the present disclosure, as shown in FIG. 3, the foregoing palmprint picture generation method includes the following operations.

Operation S12: Obtain a simulated palmprint picture, the simulated palmprint picture including a simulated palmprint curve obtained by combining sub-curves each of a pre-defined type.

Operation S14: Input the simulated palmprint picture and a pre-set noise vector into a trained palmprint picture generator to sequentially perform a plurality of downsampling operations and a plurality of upsampling operations, to generate a target palmprint picture, wherein

the plurality of downsampling operations each include: a downsampling processing on an input picture representation vector to obtain a downsampled picture representation vector, followed by a noise addition processing on the downsampled picture representation vector by using the pre-set noise vector, to obtain an output picture representation vector; and

the plurality of upsampling operations each include: an upsampling processing on an input picture representation vector to obtain an upsampled picture representation vector, and followed by a noise addition processing on the upsampled picture representation vector by using the pre-set noise vector, to obtain an output picture representation vector.

In some embodiments, in the generation process of the target palmprint picture, only the simulated palmprint picture and the first noise vector need to be input into the trained palmprint picture generator.

In all embodiments of the present disclosure, the pre-set noise vector includes a plurality of noise elements, and the plurality of noise elements are generated according to a noise distribution, e.g., a white Gaussian distribution. The number of noise elements is larger than the number of elements in another vector in the noise addition processing.

Different from the related art that relies on artificial collection of palmprint of a real person, and for palmprint of the same real person, pictures (which may be understood as the foregoing target palmprint pictures) of different modalities further need to be collected a plurality of times as a set of palmprint pictures, to train an initial palmprint picture matching model, the present disclosure does not need artificial collection, and pictures (which may be understood as the foregoing target palmprint pictures) of different modalities and consistent palmprint line features may be generated as a set of palmprint pictures only through the simulated palmprint picture and the pre-set noise vector, which greatly improves the generation efficiency of the target palmprint picture, and resolves the problem that in the related art, a relatively small sample volume is obtained through artificial collection of palmprint of a real person as a result of the privacy of palmprint being difficult to obtain, and multi-modal palmprint pictures are scarcer, causing the trained palmprint picture matching model to have poor recognition ability for the multi-modal palmprint pictures.

In all embodiments of the present disclosure, the target palmprint pictures may be used as a set of palmprint pictures to train the initial palmprint picture matching model, to obtain a target palmprint picture matching model, so that the target palmprint picture matching model may accurately extract features of user hand pictures (palmprint pictures) of various modalities. Therefore, in the training stage of the feature extraction model, a large number of target palmprint pictures of different modalities with the same palmprint line need to be used as a set of palmprint pictures for training.

Through the embodiments provided in the present disclosure, the obtained simulated palmprint picture and the first noise vector are input into the trained palmprint picture generator. The simulated palmprint picture includes a simulated palmprint curve obtained by combining sub-curves each of a pre-defined type, and the target palmprint picture generator successively performs a plurality of downsampling operations and a plurality of upsampling operations to generate a target palmprint picture. The plurality of downsampling operations each include: a downsampling processing on an input picture representation vector to obtain a downsampled picture representation vector, followed by a noise addition processing on the downsampled picture representation vector by using the pre-set noise vector, to obtain an output picture representation vector; and the plurality of upsampling operations each include: an upsampling processing on an input picture representation vector to obtain an upsampled picture representation vector, and followed by a noise addition processing on the upsampled picture representation vector by using the pre-set noise vector, to obtain an output picture representation vector. Through the foregoing processing, the target palmprint picture obtained by processing the simulated palmprint picture by the target palmprint picture generator retains the feature of the simulated palmprint curve. In addition, since the noise addition processing is performed on the input picture representation vector through the first noise vector in the foregoing downsampling operation and upsampling operation, the generated target palmprint pictures may have different modalities, so that a large number of target palmprint pictures of different modalities with the same palmprint line may be generated based on the simulated palmprint pictures, thereby achieving the technical effect of improving the generation efficiency of palmprint pictures, and further resolving the technical problem of low generation efficiency of palmprint pictures.

As an optional solution, the inputting the simulated palmprint picture and a pre-set noise vector into a trained palmprint picture generator to sequentially perform a plurality of downsampling operations and a plurality of upsampling operations, to generate a target palmprint picture includes the following operations.

S21: Determine an initial picture representation vector based on the simulated palmprint picture.

S22: Input the initial picture representation vector and the pre-set noise vector into the trained palmprint picture generator, to sequentially perform the following S23 and S24.

S23: Perform the plurality of downsampling operations through the P downsampling modules to obtain a $P^{th}$ output picture representation vector, perform the plurality of upsampling operations through the Q upsampling modules to obtain a $Q^{th}$ output picture representation vector.

S24, Generate the target palmprint picture based on the $Q^{th}$ output picture representation vector.

The input picture representation vector in a first downsampling operation of the plurality of downsampling operations is the initial picture representation vector, and the input picture representation vector in each subsequent downsampling operation is the output picture representation vector of a previous downsampling operation;

The input picture representation vector in a first upsampling operation of the plurality of upsampling operations is the output picture representation vector of a last downsampling operation of the plurality of downsampling operations, and the input picture representation vector in each subsequent upsampling operation is the output picture representation vector of a previous upsampling operation.

In some embodiments, as shown in FIG. 4, an initial picture representation vector 401, a $P^{th}$ noise-added picture representation vector 402, and a $Q^{th}$ noise-added picture representation vector 403 are shown by using a value of P being 3 and a value of Q being 2 as an example. The target palmprint picture generator is configured to pass the simulated palmprint picture through P(3) downsampling modules (a downsampling module 1, a downsampling module 2, and a downsampling module 3) and Q(2) upsampling modules (an upsampling module 1 and an upsampling module 2). The input picture representation vector for the downsampling module 1, as the first sampling module that receives the input picture representation vector, is the initial picture representation vector 401 corresponding to the foregoing simulated palmprint picture. Subsequently, the input picture representation vector for each sampling module (an upsampling module or a downsampling module) is a noise-added picture representation vector output by the previous sampling module, i.e., the output picture representation vector. For example, the downsampling module 3, as the last downsampling module, outputs a $P(3)^{th}$ noise-added picture representation vector 402, and the $P(3)^{th}$ noise-added picture representation vector 402 is the input picture representation vector for the upsampling module 1. The upsampling module 2, as the last upsampling module, outputs a $Q(2)^{th}$ noise-added picture representation vector 403. Thereafter, the target palmprint picture is generated based on the $Q(2)^{th}$ noise-added picture representation vector 403.

As an optional solution, each of the P downsampling modules includes a downsampling submodule and a first conditional generation submodule, and the performing the downsampling operation includes the following operation.

S31: The downsampling submodule in an $i^{th}$ downsampling module downsamples the input picture representation vector, to obtain an $i^{th}$ downsampled picture representation vector.

S32: The first conditional generation submodule in the $i^{th}$ downsampling module performs the noise addition processing on the $i^{th}$ downsampled picture representation vector by using the pre-set noise vector, to obtain an $i^{th}$ output picture representation vector.

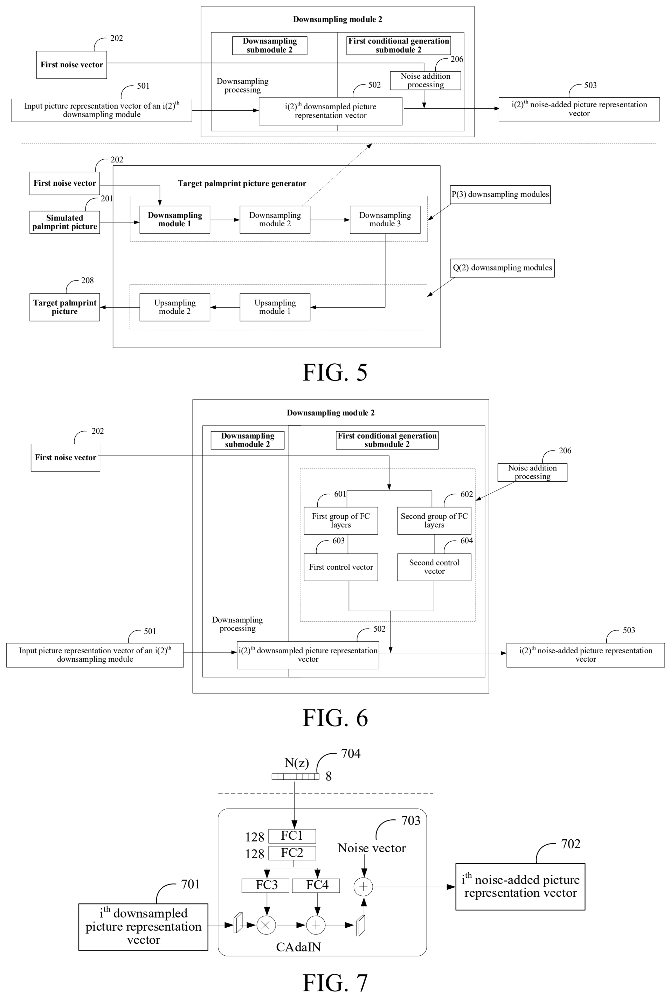

In some embodiments, as shown in FIG. 5, the operation of generating an $i(2)^{th}$ noise-added picture representation vector 502 is described by using a value of i being 2 as an example. The value of i is 2. The downsampling processing is performed on the input picture representation vector 501 of the $i(2)^{th}$ downsampling module through the downsampling submodule 2 in the $i(2)^{th}$ downsampling module (the downsampling module 2), to obtain the $i(2)^{th}$ downsampled picture representation vector 502. A first conditional generation submodule 2 performs the noise addition processing on the $i(2)^{th}$ downsampled picture representation vector 502 through the noise vector, to obtain an $i(2)^{th}$ noise-added picture representation vector 503.

As an optional solution, the first conditional generation submodule includes a first group of fully connected (FC) layers and a second group of FC layers, and the downsampling includes the following operations.

S41: The pre-set noise vector is passed through the first group of FC layers to output a first control vector.

The pre-set noise vector is passed through the second group of FC layers to output a second control vector.

S42: The noise addition processing is performed on the ith downsampled picture representation vector, based on the first control vector and the second control vector, to obtain the ith output picture representation vector.

In some embodiments, as shown in FIG. 6, the process of performing, by a conditional generation submodule, noise addition processing on a picture representation vector is described by using a value of i being 2 as an example. The performing, through the first conditional generation submodule 2 in the $i(2)^{th}$ downsampling module (the downsampling module 2), the noise addition processing on the $i(2)^{th}$ downsampled picture representation vector 502 by using the first noise vector 202, to obtain an $i(2)^{th}$ noise-added picture representation vector 503 includes: passing the first noise vector 202 through a first group of FC layers 601 in the first conditional generation submodule 2 to obtain a first control vector 603, and passing the first noise vector 202 through a second group of FC layers 602 in the first conditional generation submodule 2 to obtain a second control vector 604; and performing, based on the first control vector 603 and the second control vector 604, the noise addition processing on the $i(2)^{th}$ downsampled picture representation vector 502, to obtain the $i(2)^{th}$ noise-added picture representation vector 503.

In some embodiments, as shown in FIG. 7, CAdaIN, namely a conditional generation submodule, includes 4 FC layers, which are respectively FC1, FC2, FC3, and FC4. N(z) is the foregoing first noise vector. N(z) is successively input into FC1 and FC2 and then two branches after being output from FC2, and enters FC3 and FC4 respectively. FC1, FC2, and FC3 included in one branch constitute the foregoing first group of FC layers, and FC1, FC2, and FC4 included in the other branch constitute the foregoing second group of FC layers. After an $i^{th}$ downsampled picture representation vector 701 is input into the CAdaIN, noise addition processing is performed on the $i^{th}$ downsampled picture representation vector through the first control vector output by the first group of FC layers (FC1, FC2, and FC3) and the second control vector output by the second group of FC layers (FC1, FC2, and FC4), i.e., a pre-set another noise vector 703 is superimposed, to obtain an $i^{th}$ noise-added picture representation vector 702.

In some embodiments, the foregoing N(z) is the foregoing first noise vector. After N(z) is input into the CAdaIN, the first noise vector N(z) may further be sampled to obtain an 8-dimensional Gaussian noise sampling signal 704, and then the 8-dimensional Gaussian noise sampling signal 704 is encoded into a 128-dimensional hidden control vector through 4 continuous FC layers (FC1, FC2, FC3, and FC4). A mean value and a variance of an input feature map are adjusted through the hidden control vector. In some embodiments, the first noise vector N(z) 704 and another noise vector 703 may be generated in a same manner or differently.

In some embodiments, the foregoing manner of sampling the first noise vector N(z) to obtain the 8-dimensional Gaussian noise sampling signal 704 is described herein. If a dimension of the first noise vector N(z) is greater than or equal to 8 dimensions, such as 10 dimensions, an order of values of all the original 10 dimensions may be retained, and values of 8 dimensions are arbitrarily extracted as the 8-dimensional Gaussian noise sampling signal.

As an optional solution, the performing, based on the first control vector and the second control vector, the noise addition processing on the $i^{th}$ downsampled picture representation vector, to obtain the $i^{th}$ noise-added picture representation vector includes the following operations.

S51: Multiply the first control vector by the $i^{th}$ downsampled picture representation vector to obtain a first picture representation vector, and add the first picture representation vector and the second control vector together to obtain a second picture representation vector, the first control vector being a control vector determined based on a sampling vector, the second control vector being a control vector determined based on the sampling vector, and the sampling vector being a vector obtained by sampling the noise vector.

S52: Determine the second picture representation vector as the $i^{th}$ noise-added picture representation vector, or add the second picture representation vector and a pre-set noise vector together to obtain the $i^{th}$ noise-added picture representation vector, the pre-set noise vector and the sampling vector, and the second picture representation vector having the same dimension.

In some embodiments, the foregoing process may be implemented by, but not limited to, the following calculation manner.

$X_1$ is obtained through the following equation:

$$X_1 = fc_1(w(z))X_i + fc_2(w(z))$$

where $w(z)$ is a sampling vector obtained by sampling the pre-set (first) noise vector, $fc_1(w(z))$ is the first control vector, $fe_2(w(z))$ is the second control vector, and $X_i$ is the $i^{th}$ downsampled picture representation vector.

$X_1$ is determined as the $i^{th}$ noise-added picture representation vector, or $X_1$ and the pre-set noise vector are superimposed to obtain the $i^{th}$ noise-added picture representation vector, the pre-set noise vector, the sampling vector, and $X_1$ having the same dimension.

In some embodiments, $w(z)$ is a sampling vector obtained by sampling the noise vector, the sampling vector being the foregoing 8-dimensional Gaussian noise sampling signal 704.

In some embodiments, two manners of determining the $i^{th}$ noise-added picture representation vector are as follows:

1) No noise addition is performed, and $X_1$ is directly determined as the $i^{th}$ noise-added picture representation vector.

2) $X_1$ and the pre-set noise vector 703 in FIG. 7 are superimposed to obtain the $i^{th}$ noise-added picture representation vector, which is different from the manner in 1), and a pre-set noise vector of the same scale is added at an output position, which may further increase diversity of generated samples (which may be understood as noise-added picture representation vectors).

As an optional solution, each of the Q upsampling modules includes an upsampling submodule and a second conditional generation submodule, and the performing the upsampling operation includes the following operation.

S61: the upsampling submodule in a $j^{lh}$ upsampling module upsamples the input picture representation vector, to obtain a $j^{th}$ upsampled picture representation vector; and

the second conditional generation submodule in the $j^{th}$ upsampling module performs the noise addition processing on the $j^{th}$ upsampled picture representation vector by using the pre-set noise vector, to obtain a $j^{th}$ output picture representation vector.

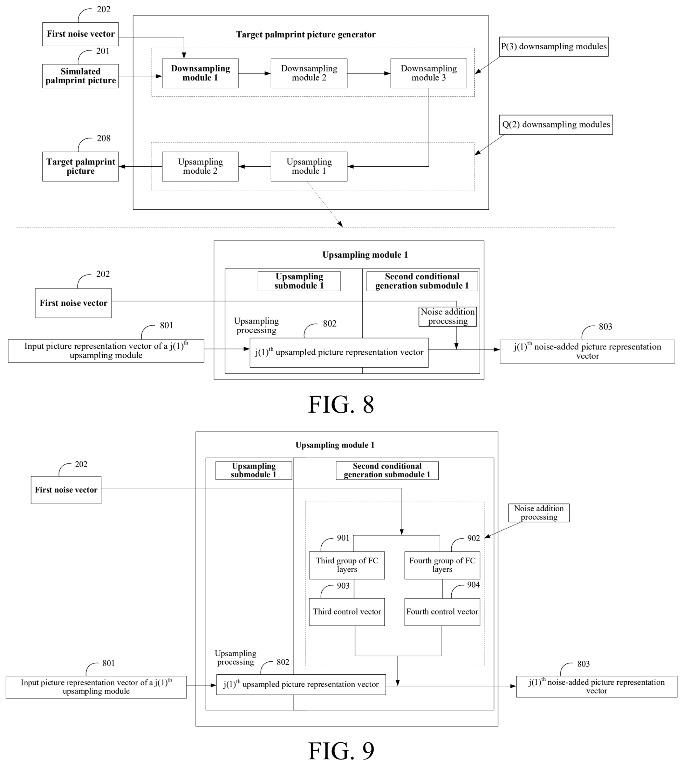

In some embodiments, as shown in FIG. 8, the operation of generating a $j(1)^{th}$ noise-added picture representation vector is described by using a value of j being 1 as an example. The value of j is 1. The upsampling processing is performed on the input picture representation vector 801 of the $j(1)^{th}$ upsampling module through the upsampling submodule 1 in the $j(1)^{th}$ upsampling module (the upsampling module 1), to obtain the $j(1)^{th}$ upsampled picture representation vector 802. The second conditional generation submodule 1 in the $j(1)^{th}$ upsampling module performs the noise addition processing on the $j(1)^{th}$ upsampled picture representation vector 802 through the first noise vector 202, to obtain a $j(1)^{th}$ noise-added picture representation vector 803.

As an optional solution, the second conditional generation submodule includes a third group of FC layers and a fourth group of FC layers, and the upsampling includes the following operations.

S71: Pass the first noise vector through the third group of FC layers to output a third control vector, and pass the first noise vector through the fourth group of FC layers to output a fourth control vector.

S72: Perform, based on the third control vector and the fourth control vector, the noise addition processing on the $j^{th}$ upsampled picture representation vector, to obtain the $j^{th}$ noise-added picture representation vector.

In some embodiments, as shown in FIG. 9, the process of performing, by a second conditional generation submodule, noise addition processing on a picture representation vector is described by using a value of j being 1 as an example. The performing the upsampling processing on the input picture representation vector 801 of the $j(1)^{th}$ upsampling module through the upsampling submodule 1 in the $j(1)^{th}$ upsampling module (the upsampling module 1), to obtain the $j(1)^{th}$ upsampled picture representation vector 802 includes: passing the first noise vector 202 through a third group of FC layers 901 in the second conditional generation submodule 1 to obtain a third control vector 903, and passing the first noise vector 202 through a fourth group of FC layers 902 in the second conditional generation submodule 1 to obtain a fourth control vector 904; and performing, based on the third control vector 903 and the fourth control vector 904, the noise addition processing on the $j(1)^{th}$ upsampled picture representation vector 802, to obtain the $j(1)^{th}$ noise-added picture representation vector 803.

In the embodiments of the present disclosure, the structure of the first conditional generation submodule may be the same as the structure of the second conditional generation submodule. With reference to FIG. 7, details are not described herein.

As an optional solution, the performing, based on the third control vector and the fourth control vector, the noise addition processing on the $j^{th}$ upsampled picture representation vector to obtain the $j^{th}$ noise-added picture representation vector further includes the following operations.

S81: Multiply the third control vector by the $j^{th}$ upsampled picture representation vector to obtain a third picture representation vector, and add the third picture representation vector and the fourth control vector together to obtain a fourth picture representation vector, the third control vector being a control vector determined based on a sampling vector, the fourth control vector being a control vector determined based on the sampling vector, and the sampling vector being obtained by sampling the noise vector.

S82: Determine the fourth picture representation vector as the $j^{th}$ noise-added picture representation vector, or add the fourth picture representation vector and a pre-set noise vector together to obtain the $j^{th}$ noise-added picture representation vector, the pre-set noise vector and the sampling vector, and the fourth picture representation vector having the same dimension.

In some embodiments, the foregoing process may be implemented by, but not limited to, the following calculation manner.

$X_2$ is obtained through the following equation:

$$X_2 = fc_1(w(z))X_j + fc_2(w(z))$$

where w(z) is a sampling vector obtained by sampling the noise vector, $fc_1(w(z))$ is the third control vector, $fc_2(w(z))$ is the fourth control vector, and $X_j$ is the $j^{th}$ downsampled picture representation vector.

$X_2$ is determined as the $j^{th}$ noise-added picture representation vector, or $X_2$ and the pre-set noise vector are superimposed to obtain the $j^{th}$ noise-added picture representation vector, the pre-set noise vector, the sampling vector, and $X_2$ having the same dimension.

In some embodiments, the process of performing, based on the third control vector and the fourth control vector, the noise addition processing on the $j^{th}$ upsampled picture representation vector to obtain the $j^{th}$ noise-added picture representation vector is similar to the foregoing process of performing, based on the first control vector and the second control vector, the noise addition processing on the $i^{th}$ downsampled picture representation vector to obtain the $i^{th}$ noise-added picture representation vector. Details are not described herein.

As an optional solution, the determining the initial picture representation vector of the simulated palmprint picture based on the simulated palmprint picture further includes the following operation.

S91: Perform first convolution processing on the simulated palmprint picture to obtain the initial picture representation vector.

The generating the target palmprint picture based on the $Q^{th}$ noise-added picture representation vector further includes the following operation.

S92: Perform second convolution processing on the $Q^{th}$ noise-added picture representation vector to obtain the target palmprint picture.

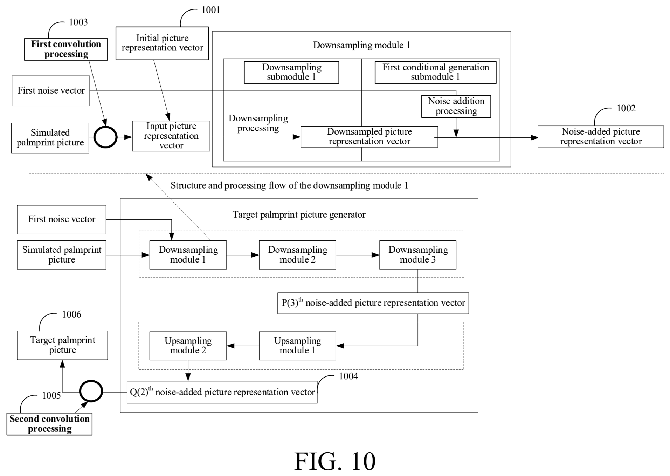

In some embodiments, as shown in FIG. 10, the downsampling module 1, as the first sampling module in the target palmprint picture generator that receives a picture representation vector, receives an initial picture representation vector 1001, and the remaining sampling modules all receive a noise-added picture representation vector 1002 output by the previous sampling module. The foregoing initial picture representation vector is 1001 generated based on the simulated palmprint picture, and a specific manner may be performing first convolution processing 1003 on the simulated palmprint picture to obtain the initial picture representation vector.

In addition, a value of Q being 2 is used as an example. A $Q(2)^{th}$ noise-added picture representation vector 1004 output by the upsampling module 2 as the last sampling module in the target palmprint picture generator that outputs a picture representation vector is subjected to second convolution processing 1005 to generate a target palmprint picture 1006.

As an optional implementation, the method further includes the following operation.

S101: Perform a plurality of rounds of training on an initial palmprint picture generator through a group of simulated palmprint sample pictures and a group of first real palmprint pictures by using an intermediate noise vector, until a target loss value satisfies a pre-set convergence condition, to obtain the trained palmprint picture generator; and

the initial palmprint picture generator sequentially performing a plurality of downsampling operations and a plurality of upsampling operations on the simulated palmprint sample pictures during the training, to generate a palmprint picture,

each of the downsampling operations during the training being configured for performing downsampling processing on an input picture representation vector to obtain a downsampled picture representation vector, and performing noise addition processing on the downsampled picture representation vector through an intermediate noise vector, to obtain a noise-added picture representation vector,

the input picture representation vector for a first downsampling operation during the training being an initial picture representation vector of the simulated palmprint sample pictures, and

the intermediate noise vector being a picture representation vector obtained by encoding each of the first real palmprint pictures, or being a pre-set noise vector;

each of the upsampling operations during the training being configured for performing upsampling processing on an input picture representation vector to obtain an upsampled picture representation vector, and performing noise addition processing on the upsampled picture representation vector through an intermediate noise vector, to obtain a noise-added picture representation vector; and

the target loss value being a loss value determined at least based on a first loss value,

the first loss value being a loss value between a generated palmprint picture and the first real palmprint picture, and

the intermediate noise vector being a picture representation vector obtained by encoding the first real palmprint picture when the first loss value is determined.

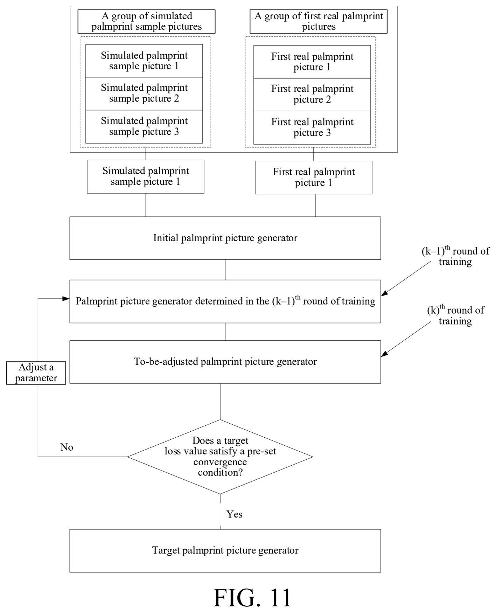

In some embodiments, as shown in FIG. 11, a plurality of rounds of training are performed on an initial palmprint picture generator through a group of simulated palmprint sample pictures (for example, a simulated palmprint sample picture 1, a simulated palmprint sample picture 2, and a simulated palmprint sample picture 3) and a group of first real palmprint pictures (a first real palmprint picture 1, a first real palmprint picture 2, and a first real palmprint picture 3), until a target loss value corresponding to the initial palmprint picture generator satisfies a pre-set convergence condition, and then the training is ended. The initial palmprint picture generator at the end of training is determine as the target palmprint picture generator, the initial palmprint picture generator including P downsampling modules and Q upsampling modules.

As an optional solution, the performing a plurality of rounds of training on an initial palmprint picture generator through a group of simulated palmprint sample pictures and a group of first real palmprint pictures by using an intermediate noise vector includes the following operation.

S111: Perform a $k^{th}$ round of training on the initial palmprint picture generator through the following operations, k being a positive integer greater than or equal to 2:

encoding a first real palmprint picture used in the $k^{th}$ round to obtain a picture representation vector in the $k^{th}$ round;

inputting the picture representation vector in the $k^{th}$ round and a first simulated palmprint sample picture used in the $k^{th}$ round into a palmprint picture generator obtained after a $(k-1)^{th}$ round of training, to obtain a first palmprint picture generated in the $k^{th}$ round;

determining a first loss value in the $k^{th}$ round based on the first real palmprint picture and the first palmprint picture generated in the $k^{th}$ round;

determining a target loss value in the $k^{th}$ round, based on the first loss value in the $k^{th}$ round; and

adjusting a parameter in the palmprint picture generator obtained after the $(k-1)^{th}$ round of training when the target loss value in the $k^{th}$ round does not satisfy the convergence condition, to obtain a palmprint picture generator obtained after the $k^{th}$ round of training.

The training ends when the target loss value in the $k^{th}$ round satisfies the convergence condition.

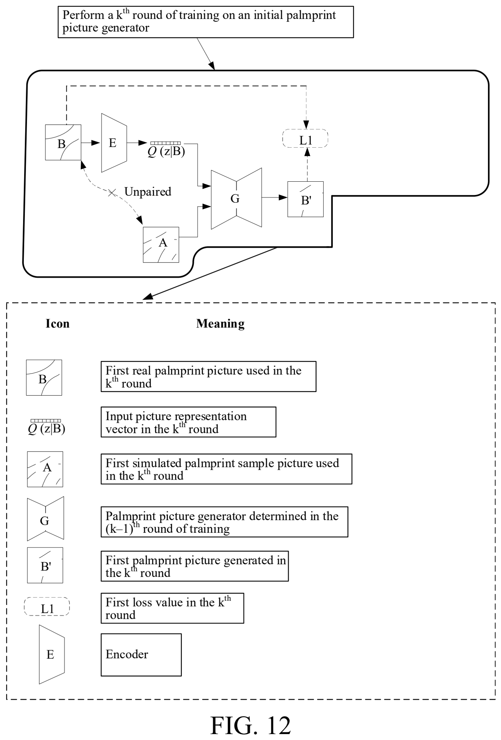

In some embodiments, as shown in FIG. 12, an initial palmprint picture generator (G) generates a palmprint picture (B') based on an input simulated palmprint sample picture (A) and an input first real palmprint picture (B). A first loss value (L1) is a loss value between the palmprint picture (B') and the first real palmprint picture (B). The foregoing process of generating, by the initial palmprint picture generator (G), the palmprint picture (B') based on the input simulated palmprint sample picture (A) and the input first real palmprint picture (B) may include: passing the first real palmprint picture (B) through an encoder to obtain an encoded picture representation vector Q (z|B) in a $k^{th}$ round, and inputting the picture representation vector and the simulated palmprint sample picture (A) into the initial palmprint picture generator (G), to obtain the palmprint picture (B');

performing a $k^{th}$ round of training on the initial palmprint picture generator through the following operations, k being a positive integer greater than or equal to 2: encoding the first real palmprint picture (B) (an encoder E may be used for encoding) used in the $k^{th}$ round to obtain a picture representation vector (Q(z|B)) in the $k^{th}$ round; inputting the picture representation vector (Q (z|B)) in the $k^{th}$ round and the first simulated palmprint sample picture (A) used in the $k^{th}$ round into a palmprint picture generator (G) obtained after a $(k-1)^{th}$ round of training to obtain a first palmprint picture (B') generated in the $k^{th}$ round; determining a first loss value (L1) in the $k^{th}$ round based on the first real palmprint picture (B) used in the $k^{th}$ round and the first palmprint picture (B') generated in the $k^{th}$ round; determining a target loss value in the $k^{th}$ round based on the first loss value (L1) in the $k^{th}$ round; adjusting a parameter in the palmprint picture generator obtained after the $(k-1)^{th}$ round of training in a case that the target loss value in the $k^{th}$ round does not satisfy a pre-set convergence condition, to obtain a palmprint picture generator obtained after the $k^{th}$ round of training; and ending the training in a case that the target loss value in the $k^{th}$ round satisfies the preset convergence condition.

As an optional solution, the determining a first loss value in the $k^{th}$ round based on the first real palmprint picture used in the $k^{th}$ round and the first palmprint picture generated in the $k^{th}$ round includes the following operations.

S121: Obtain a pixel difference between pixel values of R pixel points at the same position in the first real palmprint picture used in the $k^{th}$ round and the first palmprint picture generated in the $k^{th}$ round, to obtain R pixel differences, R being a positive integer greater than or equal to 2.

S122: Determine a sum of the R pixel differences as the first loss value in the $k^{th}$ round.

In some embodiments, the foregoing process may be implemented by, but not limited to, the following calculation manner.

$L_1$ is obtained through the following equation:

$$L_1 = \sum_{r=1}^{R} |B_r, B'_r|$$

where $B_r$ is a first pixel value of an $r^{th}$ pixel point of the first real palmprint picture used in the $k^{th}$ round, $B'_r$ is a second pixel value of an $r^{th}$ pixel point of the first palmprint picture generated in the $k^{th}$ round, the first real palmprint picture used in the $k^{th}$ round and the first palmprint picture generated in the $k^{th}$ round both include R pixel points, and $|B_r, B'_r|$ is the similarity between the first pixel value and the second pixel value.

$L_1$ is determined as the first loss value in the $k^{th}$ round.

In some embodiments, the manner of determining a first loss value in the $k^{th}$ round based on the first real palmprint pictures used in the $k^{th}$ round and the first palmprint picture generated in the $k^{th}$ round is described herein. The first real palmprint picture and the first palmprint picture are both in a picture format. In the foregoing equation of calculating $L_1$, R represents a quantity of pixel points of each of the first real palmprint picture and the first palmprint picture, $B_r$ is a first pixel value of an $r^{th}$ pixel point of the first real palmprint picture used in the $k^{th}$ round, and $B'_r$ is a second pixel value of the $r^{th}$ pixel point of the first palmprint picture generated in the $k^{th}$ round. The first loss value $L_1$ is obtained through comparison of the first pixel value and the second pixel value of any two pixel points having a correspondence among the R pixel points.

As an optional solution, the performing a $k^{th}$ round of training on an initial palmprint picture generator further includes the following operations.

S131: Discriminate, through a trained discriminator, between the first real palmprint picture used in the $k^{th}$ round and the first palmprint picture generated in the $k^{th}$ round, to obtain a first discrimination result in the $k^{th}$ round, and determine a second loss value in the $k^{th}$ round based on the first discrimination result in the $k^{th}$ round.

As an optional solution, the determining a target loss value in the $k^{th}$ round based on the first loss value in the $k^{th}$ round includes the following operation.

S132: Determine the target loss value in the $k^{th}$ round based on the first loss value in the $k^{th}$ round and the second loss value in the $k^{th}$ round.

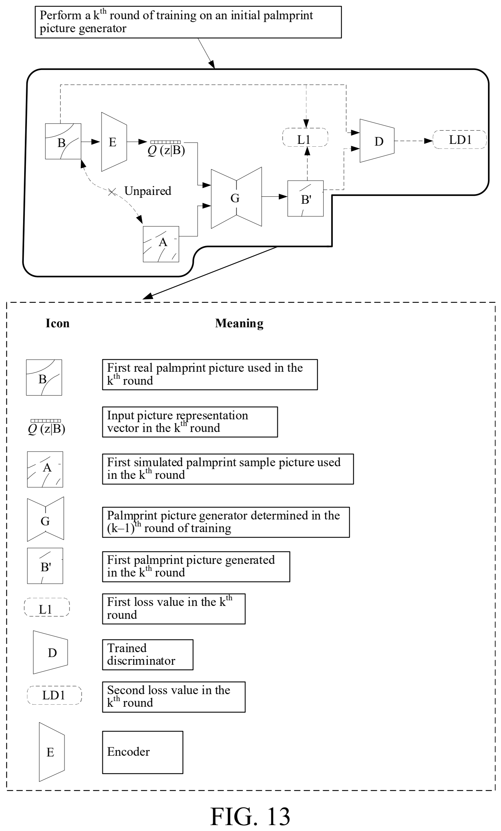

In some embodiments, as shown in FIG. 13, an initial palmprint picture generator (G) generates a palmprint picture (B') based on an input simulated palmprint sample picture (A) and an input first real palmprint picture (B). A first loss value (L1) is a loss value between the palmprint picture (B') and the first real palmprint picture (B). The input first real palmprint picture (B) and the generated palmprint picture (B') are discriminated through a trained discriminator (D), to obtain a target discrimination result, and a second loss value (LD1) is a loss value determined based on the target discrimination result. The foregoing process of generating, by the initial palmprint picture generator (G), the palmprint picture (B') based on the input simulated palmprint sample picture (A) and the input first real palmprint picture (B) may include: passing the first real palmprint picture (B) through an encoder to obtain an encoded picture representation vector Q (z|B) in a $k^{th}$ round, and inputting the picture representation vector and the simulated palmprint sample picture (A) into the initial palmprint picture generator (G), to obtain the palmprint picture (B');

performing a k$^{th}$ round of training on the initial palmprint picture generator through the following operations, k being a positive integer greater than or equal to 2: encoding the first real palmprint picture (B) (an encoder E may be used for encoding) used in the k$^{th}$ round to obtain a picture representation vector (Q(z|B)) in the k$^{th}$ round; inputting the picture representation vector (Q(z|B)) in the k$^{th}$ round and the first simulated palmprint sample picture (A) used in the k$^{th}$ round into a palmprint picture generator (G) obtained after a (k-1)$^{th}$ round of training to obtain a first palmprint picture (B') generated in the k$^{th}$ round; determining a first loss value (L1) in the k$^{th}$ round based on the first real palmprint picture (B) used in the k$^{th}$ round and the first palmprint picture (B') generated in the k$^{th}$ round; discriminating, through the target discriminator (D), the first real palmprint picture (B) used in the k$^{th}$ round and the first palmprint picture (B') generated in the k$^{th}$ round, to obtain a first discrimination result in the k$^{th}$ round; determining a second loss value (LD1) in the k$^{th}$ round based on the first discrimination result in the k$^{th}$ round; determining the target loss value in the k$^{th}$ round based on the first loss value (L1) in the k$^{th}$ round and the second loss value (LD1) in the k$^{th}$ round; adjusting a parameter in the palmprint picture generator obtained after the (k-1)$^{th}$ round of training in a case that the target loss value in the k$^{th}$ round does not satisfy a pre-set convergence condition, to obtain a palmprint picture generator obtained after the k$^{th}$ round of training; and ending the training in a case that the target loss value in the k$^{th}$ round satisfies the preset convergence condition.

As an optional solution, the determining a second loss value in the k$^{th}$ round based on the first discrimination result in the k$^{th}$ round includes the following operations.

S141: Obtain a probability that the first real palmprint picture used in the k$^{th}$ round indicated by the first discrimination result is true, to obtain a first probability, and obtain a probability that the first palmprint picture generated in the k$^{th}$ round indicated by the first discrimination result is true, to obtain a second probability.

S142: Multiply the first probability by the second probability to obtain a first probability product.

S143: Obtain a probability that the first palmprint picture generated in the k$^{th}$ round indicated by the first discrimination result is false, to obtain a third probability, and obtain a probability that the first real palmprint picture used in the k$^{th}$ round indicated by the first discrimination result is false, to obtain a fourth probability.

S144: Multiply the third probability by the fourth probability to obtain a second probability product.

S145: Determine a second loss value in the k$^{th}$ round based on the first probability product and the second probability product.

In some embodiments, the foregoing process may be implemented by, but not limited to, one of the following calculation manners.

Calculation manner I:

L$_{D1}$ is obtained through the following equation:

$$L_{D1} = -\,y_t logD(x_t) - (1 - y_t)log\,(1 - D(x_t))$$

where logD(x$_t$) is a probability that the first real palmprint picture used in the k$^{th}$ round indicated by the first discrimination result is true, log(1 - D(xt)) is a probability that the first real palmprint picture used in the k$^{th}$ round indicated by the first discrimination result is false, yt is a probability that the first palmprint picture generated in the k$^{th}$ round indicated by the first discrimination result is true, and (1 - yt) is a probability that the first palmprint picture generated in the k$^{th}$ round indicated by the first discrimination result is false.

L$_{D1}$ is determined as the second loss value in the k$^{th}$ round.

Calculation manner II:

L$_{D1}$ is obtained through the following equation:

$$L_{D1} = -\sum_{t=1}^{N1} y_t logD(x_t) - \sum_{t=1}^{N1}(1 - y_t)log\,(1 - D(x_t))$$

where logD(x$_t$) is a probability that a t$^{th}$ first real palmprint picture in N1 first real palmprint pictures used in the k$^{th}$ round indicated by the first discrimination result is true, log(1 - D(xt)) is a probability that a t$^{th}$ first real palmprint picture in N1 first real palmprint pictures used in the k$^{th}$ round indicated by the first discrimination result is false, yt is a probability that a t$^{th}$ first palmprint picture in N1 first palmprint pictures generated in the k$^{th}$ round indicated by the first discrimination result is true, and (1 - yt) is a probability that a t$^{th}$ first palmprint picture in N1 first palmprint pictures generated in the k$^{th}$ round indicated by the first discrimination result is false.

$L_{D1}$ is determined as the second loss value in the $k^{th}$ round.

In some embodiments, the target discriminator is first described. The target discriminator may identify an input palmprint picture, and determine whether the picture is a true picture or a false picture. The foregoing real picture may mean that the target discriminator considers that the picture is a true picture collected in the real world, for example, a truly collected palmprint picture. On the contrary, a false picture may mean that the target discriminator considers that the picture is not a true picture collected in the real world, but a picture synthesized through technical means.

In all embodiments of the present disclosure, training of a palmprint picture generator is the key. An initial palmprint picture generator is trained. When a palmprint picture generated by the initial palmprint picture generator is input into a target discriminator, the target discriminator determines that the palmprint picture is a true picture, which indicates that the palmprint picture generated by the initial palmprint picture generator in this case may be "realistic", and then the initial palmprint picture generator in this case may be determined as a target palmprint picture generator.

In some embodiments, the foregoing probability of being true may be understood as a probability that the target discriminator determines that the palmprint picture is a true picture, and the foregoing probability of being false may be understood as a probability that the target discriminator determines that the palmprint picture is a false picture.

In some embodiments, the first discrimination result in the $k^{th}$ round may include, but is not limited to, performing discrimination through N1 first real palmprint pictures and $N1$ first palmprint pictures by the target discriminator. The foregoing discrimination process may be performed in parallel through a plurality of processes.

As an optional solution, the performing a $k^{th}$ round of training on an initial palmprint picture generator further includes the following operation.

S151: Input an intermediate noise vector in the $k^{th}$ round and a first simulated palmprint sample picture used in the $k^{th}$ round into a palmprint picture generator obtained after the $(k-1)^{th}$ round of training, to obtain a second palmprint picture generated in the $k^{th}$ round, and determine a third loss value in the $k^{th}$ round based on the first palmprint picture generated in the $k^{th}$ round and the second palmprint picture generated in the $k^{th}$ round.

The determining the target loss value in the $k^{th}$ round based on the first loss value in the $k^{th}$ round and the second loss value in the $k^{th}$ round further includes the following operation.

S152: Determine the target loss value in the $k^{th}$ round based on the first loss value in the $k^{th}$ round, the second loss value in the $k^{th}$ round, and the third loss value in the $k^{th}$ round.

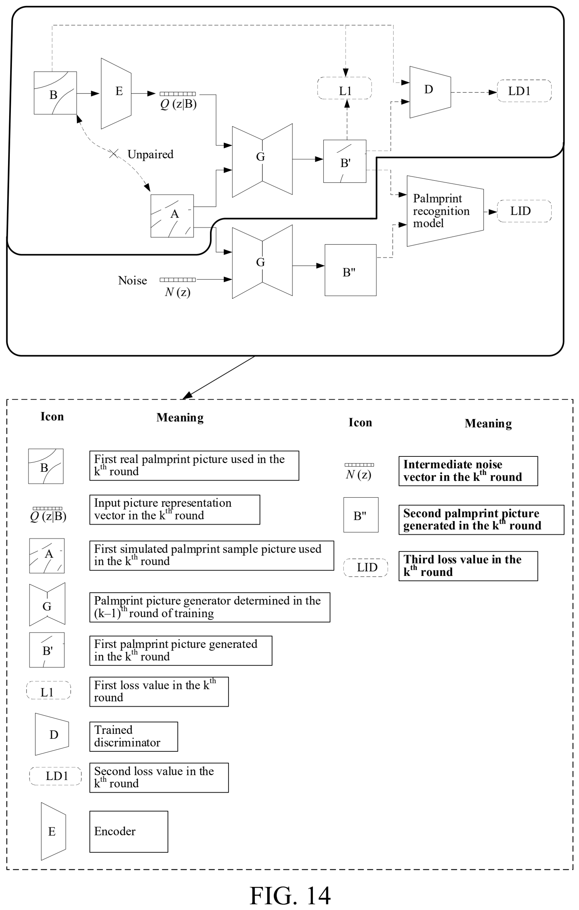

In some embodiments, for the manner of generating the first loss value and the second loss value, reference may be made to the description in FIG. 13 above, and the details are not described herein. Only the manner of determining the third loss value is described herein. As shown in FIG. 14, a noise vector (N(z)) in the $k^{th}$ round and a first simulated palmprint sample picture (A) used in the $k^{th}$ round are input into a palmprint picture generator (G) obtained after the $(k-1)^{th}$ round of training, to obtain a second palmprint picture (B") generated in the $k^{th}$ round, and a third loss value (LID) in the $k^{th}$ round is determined based on the first palmprint picture (B') generated in the $k^{th}$ round and the second palmprint picture (B") generated in the $k^{th}$ round.

The manner of determining the third loss value (LID) in the $k^{th}$ round based on the first palmprint picture (B') generated in the $k^{th}$ round and the second palmprint picture (B") generated in the $k^{th}$ round may be, but is not limited to: inputting the first palmprint picture (B') and the second palmprint picture (B") into a palmprint recognition network (palmprint recognition model), extracting feature vectors of the first palmprint picture (B') and the second palmprint picture (B") respectively, and then determining the third loss value (LID) in the $k^{th}$ round based on the feature vectors thereof.

As an optional solution, the determining a third loss value in the $k^{th}$ round based on the first palmprint picture generated in the $k^{th}$ round and the second palmprint picture generated in the $k^{th}$ round further includes the following operations.

S161: Perform vector dot product on a first feature vector of the first palmprint picture generated in the $k^{th}$ round and a second feature vector of the second palmprint picture generated in the $k^{th}$ round, to obtain a vector dot product value.

S162: Multiply a modulus of the first feature vector by a modulus of the second feature vector to obtain a product value.

S163: Divide the vector dot product value by the product value to obtain a target ratio, and subtract the target ratio from 1 to obtain the third loss value in the $k^{th}$ round.

In some embodiments, the foregoing process may be implemented by, but not limited to, the following calculation manner.

$L_{ID}$ is obtained through the following equation:

$$L_{ID} = 1 - \frac{D_{MB}(B') \cdot D_{MB}(B'')}{\|D_{MB}(B')\| * \|D_{MB}(B'')\|}$$

where $D_{MB}(B')$ is the first feature vector of the first palmprint picture generated in the $k^{th}$ round, $D_{MB}(B'')$ is the second feature vector of the second palmprint picture generated in the $k^{th}$ round, $D_{MB}(B') \cdot D_{MB}(B'')$ is a dot product of the first feature vector and the second feature vector, $\|D_{MB}(B')\|$ is the modulus of the first feature vector, and $\|D_{MB}(B'')\|$ is the modulus of the second feature vector.

$L_{ID}$ is determined as the third loss value in the $k^{th}$ round.

In some embodiments, the first palmprint picture (B') generated in the $k^{th}$ round and the second palmprint picture (B'') generated in the $k^{th}$ round are input into a palmprint recognition network (palmprint recognition model), and the first feature vector $D_{MB}(B')$ of the first palmprint picture (B') and the second feature vector $D_{MB}(B'')$ of the second palmprint picture (B'') are respectively extracted, and then the third loss value (LID) in the $k^{th}$ round is calculated based on the foregoing equation. The following is an example of the calculation process.

For example, $D_{MB}(B')$ is $(a_1, a_2, a_3)$, $D_{MB}(B'')$ is $(b_1, b_2, b_3)$, and then

$$L_{ID} = 1 - \frac{a_1 b_1 + a_2 b_2 + a_3 b_3}{\sqrt{a_1{}^2 + a_2{}^2 + a_3{}^2} * \sqrt{b_1{}^2 + b_2{}^2 + b_3{}^2}}$$

As an optional solution, the performing a $k^{th}$ round of training on an initial palmprint picture generator further includes the following operation.

S171: Determine a fourth loss value in the $k^{th}$ round based on the intermediate noise vector in the $k^{th}$ round and the picture representation vector in the $k^{th}$ round.

The determining the target loss value in the $k^{th}$ round based on the first loss value in the $k^{th}$ round, the second loss value in the $k^{th}$ round, and the third loss value in the $k^{th}$ round further includes the following operation.

S172: Determine the target loss value in the $k^{th}$ round based on the first loss value in the $k^{th}$ round, the second loss value in the $k^{th}$ round, the third loss value in the $k^{th}$ round, and the fourth loss value in the $k^{th}$ round.

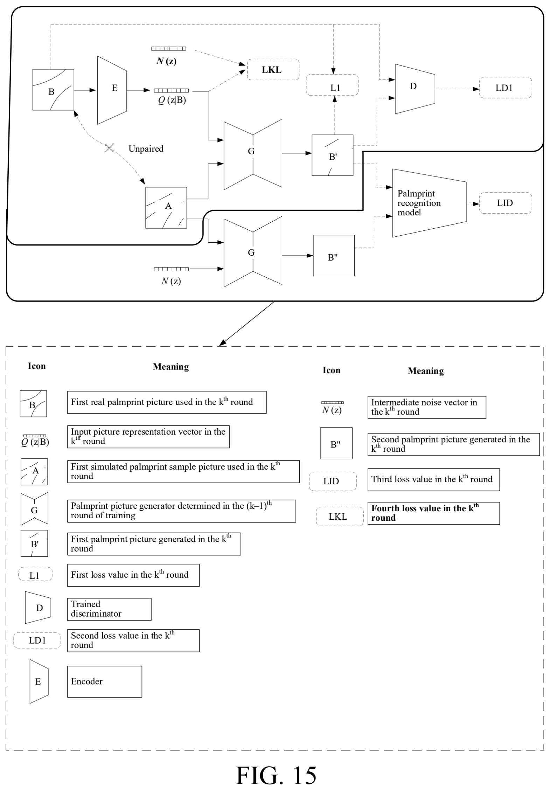

In some embodiments, for the manner of generating the first loss value, the second loss value, and the third loss value, reference may be made to the descriptions in FIG. 13 and FIG. 14 above, and the details are not described herein. Only the manner of determining the fourth loss value is described herein. As shown in FIG. 15, a fourth loss value (LKL) in the $k^{th}$ round is determined based on the noise vector (N(z), i.e., the above intermediate noise vector) in the $k^{th}$ round and the picture representation vector (Q(z|B)) in the $k^{th}$ round. The fourth loss value (LKL) may constrain the picture representation vector (Q(z|B)) in the $k^{th}$ round, and constrain distribution consistency with the noise vector (N(z)) in the $k^{th}$ round. The noise vector (N(z)) in the $k^{th}$ round may be, but is not limited to, original Gaussian noise, namely white noise.

As an optional solution, the determining a fourth loss value in the $k^{th}$ round based on the noise vector in the $k^{th}$ round and the picture representation vector in the $k^{th}$ round further includes the following operations.

S181: Obtain a value of each dimension in the picture representation vector in the $k^{th}$ round, and obtain a value of each dimension in the noise vector in the $k^{th}$ round, the picture representation vector in the $k^{th}$ round having the same total dimension as the noise vector in the $k^{th}$ round.

S182: Determine the fourth loss value in the $k^{th}$ round based on the value of each dimension in the picture representation vector in the $k^{th}$ round and the value of each dimension in the noise vector in the $k^{th}$ round.

In some embodiments, the foregoing process may be implemented by, but not limited to, the following calculation manner.

$L_{KL}$ is obtained through the following equation:

$$L_{KL} = \sum_{m=1}^{M} Q(z_m) * log \frac{Q(z_m)}{N(z_m)}$$

where $Q(z_m)$ is a value of an $m^{th}$ dimension in the picture representation vector in the $k^{th}$ round, $N(z_m)$ is a value of an $m^{th}$ dimension in the noise vector in the $k^{th}$ round, and the total dimensions of the picture representation vector in the $k^{th}$ round and the noise vector in the $k^{th}$ round are both M.

$L_{KL}$ is determined as the fourth loss value in the $k^{th}$ round.

In some embodiments, the following is an example of a calculation process of $L_{KL}$.

A value of M being 8 and a value of m being 3 are used as an example. For example, the total dimensions of the picture representation vector in the $k^{th}$ round and the noise vector in the $k^{th}$ round are both 8, the picture representation vector in the $k^{th}$ round is (c1, c2, c3, c4, c5, c6, c7, and c8), and the noise vector in the $k^{th}$ round is (d1, d2, d3, d4, d5, d6, d7, and d8), and then the value of $Q(z_3)$ is c3, and the value of $N(z_3)$ is d3, which are substituted into the foregoing equation for calculation. In this way, 8-dimensional data is summed to obtain the fourth loss value $L_{KL}$.

As an optional solution, the performing a k$^{th}$ round of training on an initial palmprint picture generator further includes the following operations.

S191: Discriminate, through the trained discriminator, between the second real palmprint picture used in the k$^{th}$ round and the second palmprint picture generated in the k$^{th}$ round, to obtain a second discrimination result in the k$^{th}$ round, and determine a fifth loss value in the k$^{th}$ round based on the second discrimination result in the k$^{th}$ round.

The determining the target loss value in the k$^{th}$ round based on the first loss value in the k$^{th}$ round, the second loss value in the k$^{th}$ round, the third loss value in the k$^{th}$ round, and the fourth loss value in the k$^{th}$ round further includes the following operation.

S192: Determine the target loss value in the k$^{th}$ round based on the first loss value in the k$^{th}$ round, the second loss value in the k$^{th}$ round, the third loss value in the k$^{th}$ round, the fourth loss value in the k$^{th}$ round, and the fifth loss value in the k$^{th}$ round.

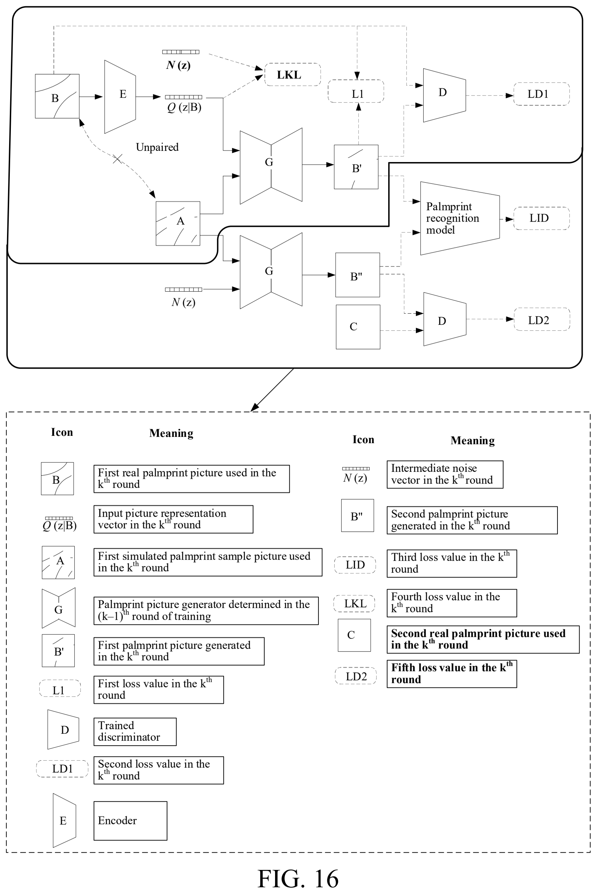

In some embodiments, for the manner of generating the first loss value, the second loss value, the third loss value, and the fourth loss value, reference may be made to the descriptions in FIG. 13, FIG. 14, and FIG. 15 above, and the details are not described herein. Only the manner of determining the fifth loss value is described herein. As shown in FIG. 16, a second real palmprint picture (C) used in the k$^{th}$ round and a second palmprint picture (B") generated in the k$^{th}$ round are discriminated through the target discriminator (D), to obtain a second discrimination result in the k$^{th}$ round, and a fifth loss value (LD2) in the k$^{th}$ round is determined based on the second discrimination result in the k$^{th}$ round.

In some embodiments, the second real palmprint picture (C) used in the k$^{th}$ round and the first real palmprint picture used in the k$^{th}$ round respectively belong to real palmprint pictures of two different persons. To be specific, the two persons have different palmprint features.

As an optional solution, the determining a fifth loss value in the k$^{th}$ round based on the second discrimination result in the k$^{th}$ round further includes the following operations.

S201: Obtain a probability that the second real palmprint picture used in the k$^{th}$ round indicated by the second discrimination result is true, to obtain a fifth probability, and obtain a probability that the second palmprint picture generated in the k$^{th}$ round indicated by the second discrimination result is true, to obtain a sixth probability.

S202: Multiply the fifth probability by the sixth probability to obtain a third probability product.

S203: Obtain a probability that the second real palmprint picture used in the k$^{th}$ round indicated by the second discrimination result is false, to obtain a seventh probability, and obtain a probability that the second palmprint picture generated in the k$^{th}$ round indicated by the second discrimination result is false, to obtain an eighth probability.

S204: Multiply the seventh probability by the eighth probability to obtain a fourth probability product.

S205: Determine a fifth loss value in the k$^{th}$ round based on the third probability product and the fourth probability product.

In some embodiments, the foregoing process may be implemented by, but not limited to, one of the following calculation manners.

Calculation manner I:

L$_{D2}$ is obtained through the following equation:

$$L_{D2} = -\, y_v log D(x_v) - (1 - y_v) log\, (1 - D(x_v))$$

where logD(x$_v$) is a probability that the second real palmprint picture used in the k$^{th}$ round indicated by the second discrimination result is true, log (1 - D(x$_v$)) is a probability that the second real palmprint picture used in the k$^{th}$ round indicated by the second discrimination result is false, y$_v$ is a probability that the second palmprint picture generated in the k$^{th}$ round indicated by the second discrimination result is true, and (1 - y$_v$) is a probability that the second palmprint picture generated in the k$^{th}$ round indicated by the second discrimination result is false.

L$_{D2}$ is determined as the fifth loss value in the k$^{th}$ round.

Calculation manner II:

L$_{D2}$ is obtained through the following equation:

$$L_{D2} = -\sum_{v=1}^{N2} y_v log D(x_v) - \sum_{v=1}^{N2} (1 - y_v) log\, (1 - D(x_v))$$

where $\log D(x_v)$ is a probability that a $v^{th}$ second real palmprint picture in N2 second real palmprint pictures used in the $k^{th}$ round indicated by the second discrimination result is true, $\log(1 - D(x_v))$ is a probability that a $v^{th}$ second real palmprint picture in N2 second real palmprint pictures used in the $k^{th}$ round indicated by the second discrimination result is false, $y_v$ is a probability that a $v^{th}$ second palmprint picture in N2 second palmprint pictures generated in the $k^{th}$ round indicated by the second discrimination result is true, and $(1 - y_v)$ is a probability that a $v^{th}$ second palmprint picture in N2 second palmprint pictures generated in the $k^{th}$ round indicated by the second discrimination result is false.

$L_{D2}$ is determined as the fifth loss value in the $k^{th}$ round.

In some embodiments, the calculation process of the fifth loss value $L_{D2}$ is similar to that of the second loss value $L_{D1}$, and the fifth loss value $L_{D2}$ may be calculated by referring to the calculation manner of the second loss value $L_{D1}$ described above. Details are not described herein.

As an optional implementation, the method further includes the following operation.

S212: Train an initial palmprint picture matching model by using a set of palmprint pictures, to obtain a target palmprint picture matching model,

the set of palmprint pictures including the target palmprint picture and another palmprint picture, the another palmprint picture being generated in the same manner as the target palmprint picture; and
the target palmprint picture matching model being configured to extract features of an input palmprint picture.

In some embodiments, palmprint pictures except the target palmprint picture in the set of palmprint pictures are the palmprint pictures generated in the same generation manner as that of the target palmprint picture. The generation manner may be, but is not limited to, outputting palmprint pictures of different modalities as the set of palmprint pictures by adjusting parameters of the same conditional generation submodules in P downsampling modules and Q upsampling modules. Palmprint line features of any two palmprint pictures in one set of palmprint pictures are consistent, which are all taken from simulated palmprint curves in a simulated palmprint picture. Since the parameters of the conditional generation submodules are different in each generation process, the output modalities may be different.

As an optional implementation, the method further includes the following operations.

S222: Combine Bézier sub-curves to obtain the simulated palmprint curve, the pre-defined type including Bézier.

S223: Generate the simulated palmprint picture including the simulated palmprint curve.

In all embodiments, the simulated palmprint picture includes the simulated palmprint curve obtained by combining the sub-curves of the pre-defined type. The pre-defined type may be a curvilinear distribution, but are not limited to Bézier, and the combination may be, but is not limited to, a free combination of a plurality of Bézier sub-curves, or an arrangement and combination according to a rule similar to that of palmprint features.

The present disclosure provides a palmprint picture generation method, which may be understood as a multi-modal palmprint generation method. A conditional generation submodule is added to each module of a generative adversarial network to enhance the ability of a model to learn diverse samples. Palmprint sample pictures of different modalities may be generated simultaneously by controlling conditional probability, thereby implementing the multi-modal palmprint generation ability of a visible light modality and an infrared modality. A palmprint picture matching model is trained through the generated palmprint sample pictures, to enhance a fitting effect of the palmprint picture matching model for images of different modalities. In addition, a twin ID protection module is added to maintain consistency of palmprint lines of the same ID.

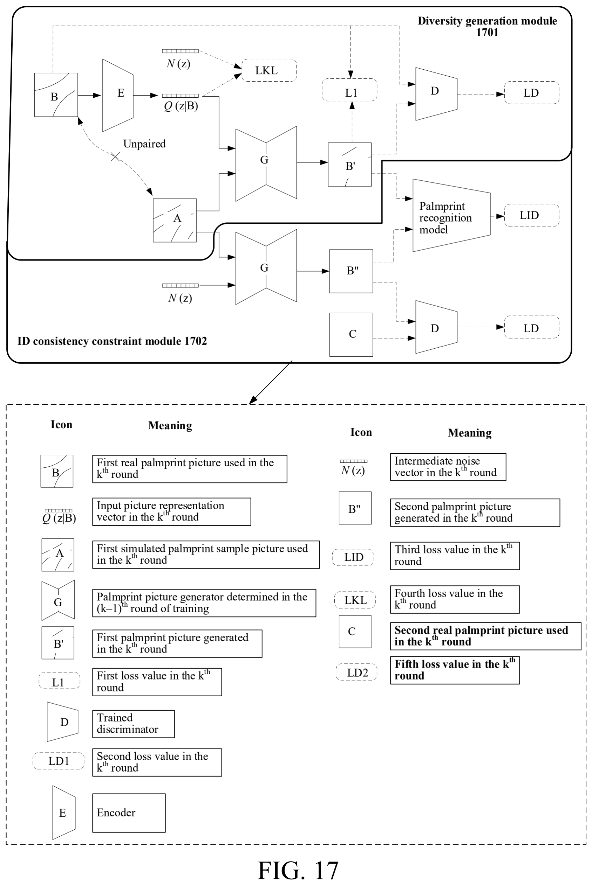

As shown in FIG. 17, two modules are mainly included:

one is a diversity generation module 1701, configured to increase intra-class diversity of generated samples, and
the other is an ID consistency constraint module 1702, configured to control intra-class ID consistency of samples.

For a simulated image B' (which may be understood as the foregoing first palmprint picture) generated by a palmprint picture generator, L1 is calculated through a real palmprint image B (which may be understood as the foregoing first real palmprint picture) to constrain authenticity of skin and muscle texture of the generated B'. To constrain Q(z|B), a KL divergence between Q(z|B) and N(z) is calculated as a loss function, to constrain distribution consistency of Q(z|B) and N(z). The obtained B' and B are input into a target discriminator D, and the target discriminator includes three convolutional neural network layers. The discriminator extracts features of B' and B, and then optimizes the authenticity of the generated B' through adversarial loss.

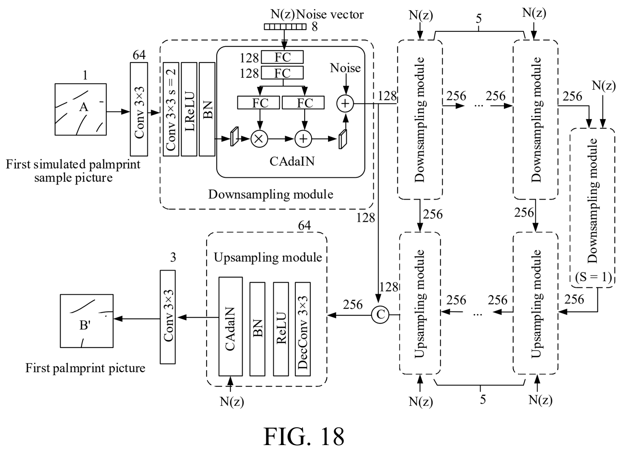

To increase the diversity of generated samples, a conditional generation submodule is designed to enhance the diversity of generated samples. As shown in FIG. 18, the overall structure of the target palmprint picture generator may be composed of 7 downsampling modules and 6 upsampling modules. Each downsampling module and each upsampling module respectively includes a conditional generation submodule CAdaIN.

I. Diversity generation module

Training stage: The diversity generation module firstly maps a real palmprint image B to a Gaussian noise domain vector Q(z|B) (which may be understood as the foregoing picture representation vector) through an encoder E, and a generator G (which may be understood as the foregoing palmprint picture generator) remaps the encoded noise domain vector Q(z|B) to a palmprint image domain by using an unpaired Bézier palmprint line A (which may be understood as the foregoing first simulated palmprint picture) as a condition. The Bézier palmprint line A is a palmprint-like curve formed by combining different Bézier sub-curves.

Reasoning stage: A self-defined Bézier palmprint line A and Q(z|B) are input into the generator G to generate palmprint samples of different modalities (which may be understood as the foregoing target palmprint picture).

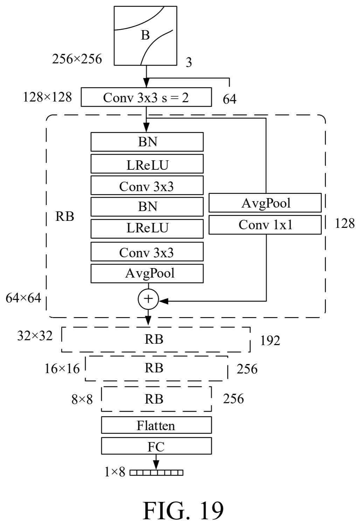

As shown in FIG. 19, the structure of the encoder E is composed of 4 residual blocks (RB) and 1 FC layer. In the figure, BN represents a batch normalization layer, LReLU represents a leaky ReLU layer, conv represents a convolutional layer, avgpool represents an average pooling layer, FC represents an FC layer, and Flatten is a function for flattening a multidimensional array into a one-dimensional array.

II. ID consistency constraint module

To ensure the intra-class ID consistency of generated simulated palms, an ID consistency constraint module is provided. The module uses a twin structure. For the same input Bézier palmprint line A, a new random control hidden vector N(z) is input into the generator G to generate a new simulated palmprint B". B' and B" are respectively input into a trained palmprint feature extraction model based on a real palmprint image to extract a 512-dimensional feature vector. A cosine similarity of B' and B" is calculated based on the extracted feature vector, and consistency of intra-class samples is constrained through the LID.

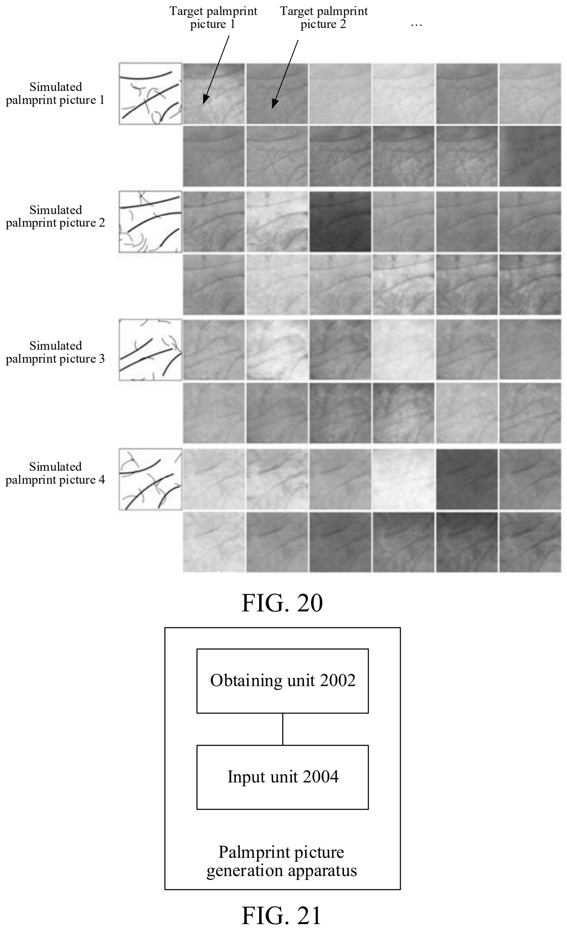

Through the palmprint picture generation method provided in the present disclosure, palmprint effect pictures of different modalities generated by a single Bézier curve (which may be understood as the foregoing simulated palmprint picture) may be used, and palms of various modalities (which may be understood as the foregoing target palmprint pictures) may be generated by adjusting the input random noise (N(z)), including various visible light and infrared black and white images. As shown in FIG. 20, through the palmprint picture generation method, target palmprint pictures of different modalities may be generated based on a single simulated palmprint picture. For example, through a simulated palmprint picture 1, a simulated palmprint picture 2, a simulated palmprint picture 3, and a simulated palmprint picture 4, 12 target palmprint pictures may be generated. The simulated palmprint picture 1 is used as an example. After a target palmprint picture 1 is generated through the simulated palmprint picture 1 and a noise vector, another noise vector may be input, or the first noise vector is adjusted to output a target palmprint picture 2 with a different modality from the target palmprint picture 1, but with consistent palmprint lines (all are consistent with the simulated palmprint picture 1), and so on, so as to generate more target palmprint pictures of other modalities. Effectiveness of the provided CAdaIN module is verified. In addition, palmprint lines generated under a single Bézier curve are consistent, and no extra palms appear. Effectiveness of the provided ID consistency constraint module is demonstrated.

For brevity, the foregoing method embodiments are described as a series of action combinations. However, it is to be appreciated by a person skilled in the art that the present disclosure is not limited to the described sequence of the actions, because some operations may be performed in another sequence or simultaneously according to the present disclosure. In addition, a person skilled in the art also needs to know that the embodiments described in the specification are all preferred embodiments, and the involved actions and modules are not necessary for the present disclosure.

According to another aspect of the embodiments of the present disclosure, a palmprint picture generation apparatus for implementing the foregoing palmprint picture generation method is further provided. FIG. 21 is a structural block diagram of a palmprint picture generation apparatus according to an embodiment of the present disclosure. As shown in FIG. 21, the apparatus includes:

an obtaining unit 2002, configured to obtain a simulated palmprint picture, the simulated palmprint picture comprising a simulated palmprint curve obtained by combining sub-curves each of a pre-defined type;

an input unit 2004, configured to input the simulated palmprint picture and a pre-set noise vector into a trained palmprint picture generator to sequentially perform a plurality of downsampling operations and a plurality of upsampling operations, to generate a target palmprint picture, wherein

the plurality of downsampling operations each include: a downsampling processing on an input picture representation vector to obtain a downsampled picture representation vector, followed by a noise addition processing on the downsampled picture representation vector by using the pre-set noise vector, to obtain an output picture representation vector; and

the plurality of upsampling operations each include: an upsampling processing on an input picture representation vector to obtain an upsampled picture representation vector, and followed by a noise addition processing on the upsampled picture representation vector by using the pre-set noise vector, to obtain an output picture representation vector.

As an optional solution, the input unit includes:

a determining module, configured to determine an initial picture representation vector based on the simulated palmprint picture;

a first sampling module, configured to perform the plurality of downsampling operations through the P downsampling modules to obtain a $P^{th}$ output picture representation vector, wherein the input picture representation vector in a first downsampling operation of the plurality of downsampling operations is the initial picture representation vector, and the input picture representation vector in each subsequent downsampling operation is the output picture representation vector of a previous downsampling operation;

a second sampling module, configured to perform the plurality of upsampling operations through the Q upsampling modules to obtain a $Q^{th}$ output picture representation vector, wherein the input picture representation vector in a first upsampling operation of the plurality of upsampling operations is the output picture representation vector of a last downsampling operation of the plurality of downsampling operations, and the input picture representation vector in each subsequent upsampling operation is the output picture representation vector of a previous upsampling operation;

a determining module, configured to generate the target palmprint picture based on the $Q^{th}$ output picture representation vector.

As an optional solution, each of the P downsampling modules includes a downsampling submodule and a first conditional generation submodule, and

the downsampling submodule in an $i^{th}$ downsampling module downsamples the input picture representation vector, to obtain an $i^{th}$ downsampled picture representation vector; and

the first conditional generation submodule in the $i^{th}$ downsampling module performs the noise addition processing on the $i^{th}$ downsampled picture representation vector by using the preset noise vector, to obtain an $i^{th}$ output picture representation vector.

As an optional solution, the first conditional generation submodule includes a first group of FC layers and a second group of FC layers, and

the pre-set noise vector is passed through the first group of FC layers to output a first control vector;

the pre-set noise vector is passed through the second group of FC layers to output a second control vector; and

the noise addition processing is performed on the ith downsampled picture representation vector, based on the first control vector and the second control vector, to obtain the ith output picture representation vector.

As an optional solution, each of the Q upsampling modules includes an upsampling submodule and a second conditional generation submodule, and

the upsampling submodule in a $j^{th}$ upsampling module upsamples the input picture representation vector, to obtain a $j^{th}$ upsampled picture representation vector; and

the second conditional generation submodule in the $j^{th}$ upsampling module performs the noise addition processing on the $j^{th}$ upsampled picture representation vector by using the pre-set noise vector, to obtain a $j^{th}$ output picture representation vector.

As an optional solution, the second conditional generation submodule includes a third group of FC layers and a fourth group of FC layers, and

the pre-set noise vector is passed through the third group of FC layers to output a third control vector;

the pre-set noise vector is passed through the fourth group of FC layers to output a fourth control vector; and

the noise addition processing is performed on the $j^{th}$ upsampled picture representation vector, based on the third control vector and the fourth control vector, to obtain the $j^{th}$ output picture representation vector.

As an optional solution, the determining module is configured to perform first convolution processing on the simulated palmprint picture to obtain the initial picture representation vector.

The determining module is configured to perform second convolution processing on the $Q^{th}$ output picture representation vector to obtain the target palmprint picture.

As an optional solution, the apparatus further includes:

a first training unit, configured to perform a plurality of rounds of training on an initial palmprint picture generator through a group of simulated palmprint sample pictures and a group of first real palmprint pictures by using an intermediate noise vector, until a target loss value satisfies a pre-set convergence condition, to obtain the trained palmprint picture generator; and

the target loss value being a loss value determined at least based on a first loss value,

the first loss value being a loss value between a generated palmprint picture and a first real palmprint picture, and

the intermediate noise vector being a picture representation vector obtained by encoding the first real palmprint picture when the first loss value is determined.

As an optional solution, the first training unit includes:
a training module, configured to perform a $k^{th}$ round of training on the initial palmprint picture generator through the following operations, k being a positive integer greater than or equal to 2:

encoding a first real palmprint picture used in the $k^{th}$ round to obtain a picture representation vector in the $k^{th}$ round;

inputting the picture representation vector in the $k^{th}$ round and a first simulated palmprint sample picture used in the $k^{th}$ round into a palmprint picture generator obtained after a $(k-1)^{th}$ round of training, to obtain a first palmprint picture generated in the $k^{th}$ round;

determining a first loss value in the $k^{th}$ round based on the first real palmprint picture and the first palmprint picture generated in the $k^{th}$ round;

determining a target loss value in the $k^{th}$ round, based on the first loss value in the $k^{th}$ round; and

adjusting a parameter in the palmprint picture generator obtained after the $(k-1)^{th}$ round of training when the target loss value in the $k^{th}$ round does not satisfy the convergence condition, to obtain a palmprint picture generator obtained after the $k^{th}$ round of training.

As an optional solution, the training module is further configured to: discriminate, through a trained discriminator, between the first real palmprint pictures used in the $k^{th}$ round and the first palmprint picture generated in the $k^{th}$ round, to obtain a first discrimination result in the $k^{th}$ round; and determine a second loss value in the $k^{th}$ round based on the first discrimination result in the $k^{th}$ round.

The training module is further configured to determine the target loss value in the $k^{th}$ round based on the first loss value in the $k^{th}$ round and the second loss value in the $k^{th}$ round.

As an optional solution, the training module is further configured to: input an intermediate noise vector in the $k^{th}$ round and the first simulated palmprint sample pictures used in the $k^{th}$ round into the palmprint picture generator obtained after the $(k-1)^{th}$ round of training to obtain a second palmprint picture generated in the $k^{th}$ round; and determine a third loss value in the $k^{th}$ round based on the first palmprint picture generated in the $k^{th}$ round and the second palmprint picture generated in the $k^{th}$ round.

The training module is further configured to determine the target loss value in the $k^{th}$ round based on the first loss value in the $k^{th}$ round, the second loss value in the $k^{th}$ round, and the third loss value in the $k^{th}$ round.

As an optional solution, the training module is further configured to determine a fourth loss value in the $k^{th}$ round based on the intermediate noise vector in the $k^{th}$ round and the picture representation vector in the $k^{th}$ round.

The training module is further configured to determine the target loss value in the $k^{th}$ round based on the first loss value in the $k^{th}$ round, the second loss value in the $k^{th}$ round, the third loss value in the $k^{th}$ round, and the fourth loss value in the $k^{th}$ round.

As an optional solution, the training module is further configured to: discriminate, through the trained discriminator, between a second real palmprint picture used in the $k^{th}$ round and the second palmprint picture generated in the $k^{th}$ round, to obtain a second discrimination result in the $k^{th}$ round; and determine a fifth loss value in the $k^{th}$ round based on the second discrimination result in the $k^{th}$ round.

The training module is further configured to determine the target loss value in the $k^{th}$ round based on the first loss value in the $k^{th}$ round, the second loss value in the $k^{th}$ round, the third loss value in the $k^{th}$ round, the fourth loss value in the $k^{th}$ round, and the fifth loss value in the $k^{th}$ round.

As an optional solution, the apparatus further includes:

a second training unit, configured to train an initial palmprint picture matching model by using a set of palmprint pictures, to obtain a target palmprint picture matching model,

the set of palmprint pictures comprising the target palmprint picture; and

the target palmprint picture matching model being configured to extract features of an input palmprint picture.

As an optional solution, the apparatus further includes:

a combining unit, configured to combine Bézier sub-curves to obtain the simulated palmprint curve; and

a generating unit, configured to generate the simulated palmprint picture comprising the simulated palmprint curve.

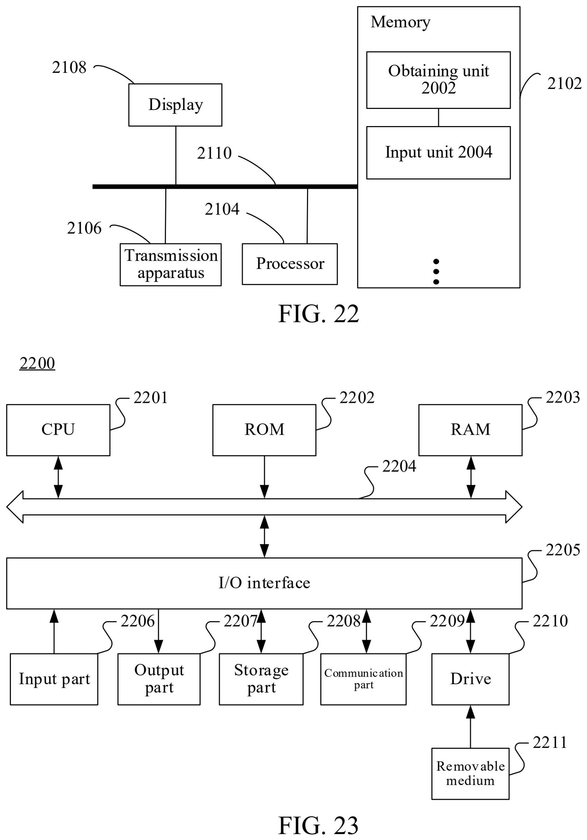

According to still another aspect of the embodiments of the present disclosure, an electronic device for implementing the foregoing palmprint picture generation method is further provided. The electronic device may be a terminal device or a server. In this embodiment, an example in which the electronic device is a server is used for description. As shown in FIG. 22, the electronic device includes a memory 2102 and a processor 2104. The memory 2102 has a computer program stored therein. The processor 2104 is configured to perform the operations in any one of the foregoing method embodiments through the computer program.

In some embodiments, the foregoing electronic device may be located in at least one of a plurality of network devices in a computer network.

In some embodiments, the foregoing processor may be configured to perform the following operations through the computer program.

S1: Obtain a simulated palmprint picture, the simulated palmprint picture comprising a simulated palmprint curve obtained by combining sub-curves each of a pre-defined type.

S2: Input

the simulated palmprint picture and a pre-set noise vector into a trained palmprint picture generator to sequentially perform a plurality of downsampling operations and a plurality of upsampling operations, to generate a target palmprint picture, wherein

the plurality of downsampling operations each include: a downsampling processing on an input picture representation vector to obtain a downsampled picture representation vector, followed by a noise addition processing on the downsampled picture representation vector by using the pre-set noise vector, to obtain an output picture representation vector; and

the plurality of upsampling operations each include: an upsampling processing on an input picture representation vector to obtain an upsampled picture representation vector, and followed by a noise addition processing on the upsampled picture representation vector by using the pre-set noise vector, to obtain an output picture representation vector.

In some embodiments, a person of ordinary skill in the art may understand that the structure shown in FIG. 22 is merely an example. The electronic device may also be a terminal device such as a smartphone (such as an Android mobile phone or an iOS mobile phone), a tablet computer, a palm computer, a mobile Internet device (MID), or a PAD. A structure of the foregoing electronic device is not limited in FIG. 22. For example, the electronic device may further include more or fewer components (for example, a network interface) than those shown in FIG. 22, or has a configuration different from that shown in FIG. 22.

The memory 2102 may be configured to store a software program and a module, for example, program instructions/modules corresponding to the palmprint picture generation method and apparatus in the embodiments of the present disclosure, and the processor 2104 performs various functional applications and data processing by running the software program and the module stored in the memory 2102, so as to implement the foregoing palmprint picture generation method. The memory 2102 may include a high-speed random memory, and may further include a non-volatile memory, such as one or more magnetic storage apparatuses, a flash memory, or another non-volatile solid-state memory. In some embodiments, the memory 2102 may further include memories remotely arranged relative to the processor 2104, and the remote memories may be connected to a terminal through a network. Examples of the foregoing network include, but are not limited to, the Internet, an intranet, a local area network, a mobile communication network, and a combination thereof. The memory 2102 may specifically be, but is not limited to, being configured to store information such as a sample feature of an item and a target virtual resource account. In an example, as shown in FIG. 22, the foregoing memory 2102 may include, but is not limited to, the obtaining unit 2002 and the input unit 2004 in the foregoing palmprint picture generation apparatus. In addition, the memory may further include, but is not limited to, another module unit in the foregoing palmprint picture generation apparatus. Details are not described again in this example.

In some embodiments, a transmission apparatus 2106 is configured to receive or transmit data through a network. A specific example of the foregoing network may include a wired network and a wireless network. In an example, the transmission apparatus 2106 includes a network interface controller (NIC), which may be connected to another network device and a router through a network cable to communicate with the Internet or a local area network. In an example, the transmission apparatus 2106 is a radio frequency (RF) module, which is configured to communicate with the Internet in a wireless manner.

In addition, the foregoing electronic device further includes: a display 2108, configured to display the foregoing to-be-processed order information; and a connection bus 2110, configured to connect various module components in the foregoing electronic device.

In another embodiment, the foregoing terminal device or the server may be a node in a distributed system. The distributed system may be a blockchain system. The blockchain system may be a distributed system formed through connection of a plurality of nodes in the form of network communication. A peer-to-peer (P2P) network may be formed between the nodes. Any form of computing device, such as an electronic device including a server and a terminal, may become a node in the blockchain system by joining the P2P network.

According to an aspect of the present disclosure, a computer program product is provided, the computer program product including a computer program/instruction, the computer program/instruction including program code for performing the method shown in the flowchart. In such an embodiment, the computer program may be downloaded and installed from a network through a communication part 2209, and/or installed from a removable medium 2211. When the computer program is executed by a central processing unit (CPU) 2201, various functions provided in the embodiments of the present disclosure are executed.

The sequence numbers of the foregoing embodiments of the present disclosure are merely for description, and do not represent the preference of the embodiments.

FIG. 23 is a structural block diagram schematically showing a computer system of an electronic device for implementing an embodiment of the present disclosure.

A computer system 2200 of the electronic device shown in FIG. 23 is merely an example, and does not constitute any limitation on functions and a range of application of the embodiments of the present disclosure.

As shown in FIG. 23, the computer system 2200 includes a CPU 2201, which may perform various suitable actions and processing based on a program stored in a read-only memory (ROM) 2202 or a program loaded from a storage part 2208 into a random access memory (RAM) 2203. The RAM 2203 further has various programs and data required for system operation stored therein. The CPU 2201, the ROM 2202, and the RAM 2203 are connected to each other through a bus 2204. An input/output interface (I/O interface) 2205 is also connected to the bus 2204.

The following components are connected to the I/O interface 2205: an input part 2206 including a keyboard, a mouse, or the like; an output part 2207 including a cathode ray tube (CRT), a liquid crystal display (LCD), a speaker, or the like; the storage part 2208 including a hard disk, or the like; and a communication part 2209 including a network interface card such as a local area network (LAN) card and a modem. The communication part 2209 performs communication through a network such as the Internet. A drive 2210 is also connected to the I/O interface 2205 as required. A removable medium 2211 such as a magnetic disk, an optical disk, a magneto-optical disk, or a semiconductor memory is installed on the drive 2210 as required, so that a computer program read from the removable medium is installed into the storage part 2208 as required.

Particularly, according to the embodiments of the present disclosure, the process described in each method flowchart may be implemented as a computer software program. For example, this embodiment of the present disclosure includes a computer program product, the computer program product including a computer program carried on a computer-readable medium, the computer program including program code for performing the methods shown in the flowcharts. In such an embodiment, the computer program may be downloaded and installed from a network through a communication part 2209, and/or installed from a removable medium 2211. When the computer program is executed by the CPU 2201, various functions defined in the system of the present disclosure are executed.

According to an aspect of the present disclosure, a computer-readable storage medium is provided. A processor of a computer device reads a computer instruction from the computer-readable storage medium. The processor executes the computer instruction, causing the computer device to perform the method provided in the foregoing various optional implementations.

In some embodiments, a person of ordinary skill in the art may understand that all or some operations of the various methods in the foregoing embodiments may be performed by instructing related hardware of a terminal device through a program. The program may be stored in a computer-readable storage medium. The storage medium may include: a flash drive, a ROM, a RAM, a magnetic disk, an optical disk, or the like.

When the integrated unit in the foregoing embodiment is implemented in the form of a software function unit and sold or used as an independent product, the integrated unit may be stored in the foregoing computer-readable storage medium. Based on such an understanding, the technical solutions of the present disclosure essentially, or the part contributing to the prior art, or all or a part of the technical solutions may be implemented in the form of a software product. The computer software product is stored in a storage medium, and includes several instructions for enabling one or more computer devices (which may be a personal computer, a server, a network device, or the like) to perform all or a part of the operations of the method described in the embodiments of the present disclosure.

In the foregoing embodiments of the present disclosure, the descriptions of the embodiments have respective emphasis. For a part not described in detail in an embodiment, reference may be made to related descriptions of other embodiments.

In the several embodiments provided in the present disclosure, the disclosed client may be implemented in another manner. The apparatus embodiment described above is merely an example. For example, division of the units is merely division of logical functions, and may be another division during actual implementation. For example, a plurality of units or components may be combined or may be integrated into another system, or some features may be ignored or not performed. In addition, the displayed or discussed mutual coupling or direct coupling or communication connection may be implemented through some interfaces. The indirect coupling or communication connection between the units or modules may be implemented in electrical or other forms.

The units described as separate components may or may not be physically separated, and the components displayed as units may or may not be physical units, and may be located in one place or may be distributed on a plurality of network units. Some or all of the units may be selected based on an actual need to achieve the objectives of the solutions of the embodiments.

In addition, the functional units in the embodiments of the present disclosure may be integrated into one processing unit, or each of the units may exist alone physically, or two or more units may be integrated into one unit. The integrated unit may be implemented in a form of hardware, or may be implemented in a form of a software functional unit.

## Claims

1. A palmprint picture generation method, executable by an electronic device, the method comprising:

obtaining a simulated palmprint picture, the simulated palmprint picture comprising a simulated palmprint curve obtained by combining sub-curves each of a pre-defined type;
inputting the simulated palmprint picture and a pre-set noise vector into a trained palmprint picture generator to sequentially perform a plurality of downsampling operations and a plurality of upsampling operations, to generate a target palmprint picture, wherein

the plurality of downsampling operations each comprise: a downsampling processing on an input picture representation vector to obtain a downsampled picture representation vector, followed by a noise addition processing on the downsampled picture representation vector by using the pre-set noise vector, to obtain an output picture representation vector; and
the plurality of upsampling operations each comprise: an upsampling processing on an input picture representation vector to obtain an upsampled picture representation vector, and followed by a noise addition processing on the upsampled picture representation vector by using the pre-set noise vector, to obtain an output picture representation vector.

2. The method according to claim 1, wherein the trained palmprint picture generator comprises P downsampling modules and Q upsampling modules, P and Q being positive integers, and the inputting the simulated palmprint picture and a pre-set noise vector into a trained palmprint picture generator to sequentially perform a plurality of downsampling operations and a plurality of upsampling operations, to generate a target palmprint picture comprise:

determining an initial picture representation vector based on the simulated palmprint picture;
inputting the initial picture representation vector and the pre-set noise vector into the trained palmprint picture generator, to sequentially perform the plurality of downsampling operations through the P downsampling modules to obtain a $P^{th}$ output picture representation vector, perform the plurality of upsampling operations through the Q upsampling modules to obtain a $Q^{th}$ output picture representation vector, and generate the target palmprint picture based on the $Q^{th}$ output picture representation vector;
wherein the input picture representation vector in a first downsampling operation of the plurality of downsampling operations is the initial picture representation vector, and the input picture representation vector in each subsequent downsampling operation is the output picture representation vector of a previous downsampling operation;
the input picture representation vector in a first upsampling operation of the plurality of upsampling operations is the output picture representation vector of a last downsampling operation of the plurality of downsampling operations, and the input picture representation vector in each subsequent upsampling operation is the output picture representation vector of a previous upsampling operation.

3. The method according to claim 2, wherein each of the P downsampling modules comprises a downsampling submodule and a first conditional generation submodule,

the downsampling submodule in an $i^{th}$ downsampling module downsamples the input picture representation vector, to obtain an $i^{th}$ downsampled picture representation vector; and
the first conditional generation submodule in the $i^{th}$ downsampling module performs the noise addition processing on the $i^{th}$ downsampled picture representation vector by using the pre-set noise vector, to obtain an $i^{th}$ output picture representation vector.

4. The method according to claim 3, wherein the first conditional generation submodule comprises a first group of fully connected, FC, layers and a second group of FC layers, wherein

the pre-set noise vector is passed through the first group of FC layers to output a first control vector;
the pre-set noise vector is passed through the second group of FC layers to output a second control vector; and
the noise addition processing is performed on the $i^{th}$ downsampled picture representation vector, based on the first control vector and the second control vector, to obtain the $i^{th}$ output picture representation vector.

5. The method according to claim 2, wherein each of the Q upsampling modules comprises an upsampling submodule and a second conditional generation submodule,

the upsampling submodule in a $j^{th}$ upsampling module upsamples the input picture representation vector, to obtain a $j^{th}$ upsampled picture representation vector; and
the second conditional generation submodule in the $j^{th}$ upsampling module performs the noise addition processing on the $j^{th}$ upsampled picture representation vector by using the pre-set noise vector, to obtain a $j^{th}$ output picture representation vector.

6. The method according to claim 5, wherein the second conditional generation submodule comprises a third group of fully connected, FC, layers and a fourth group of FC layers, wherein

the pre-set noise vector is passed through the third group of FC layers to output a third control vector;
the pre-set noise vector is passed through the fourth group of FC layers to output a fourth control vector; and
the noise addition processing is performed on the $j^{th}$ upsampled picture representation vector, based on the third control vector and the fourth control vector, to obtain the $j^{th}$ output picture representation vector.

7. The method according to claim 2, wherein the determining an initial picture representation vector based on the simulated palmprint picture comprises:

performing first convolution processing on the simulated palmprint picture to obtain the initial picture representation vector;
wherein second convolution processing is performed on the $Q^{th}$ output picture representation vector to obtain the target palmprint picture.

8. The method according to any one of claims 1 to 7, further comprising:

performing a plurality of rounds of training on an initial palmprint picture generator through a group of simulated palmprint sample pictures and a group of first real palmprint pictures by using an intermediate noise vector, until a target loss value satisfies a pre-set convergence condition, to obtain the trained palmprint picture generator; and the target loss value being a loss value determined at least based on a first loss value,

the first loss value being a loss value between a generated palmprint picture and a first real palmprint picture, and
the intermediate noise vector being a picture representation vector obtained by encoding the first real palmprint picture when the first loss value is determined.

9. The method according to claim 8, wherein the performing a plurality of rounds of training on an initial palmprint picture generator through a group of simulated palmprint sample pictures and a group of first real palmprint pictures by using an intermediate noise vector comprises:
performing a $k^{th}$ round of training on the initial palmprint picture generator through the following operations, k being a positive integer greater than or equal to 2:

encoding a first real palmprint picture used in the $k^{th}$ round to obtain a picture representation vector in the $k^{th}$ round;
inputting the picture representation vector in the $k^{th}$ round and a first simulated palmprint sample picture used in the $k^{th}$ round into a palmprint picture generator obtained after a $(k-1)^{th}$ round of training, to obtain a first palmprint picture generated in the $k^{th}$ round;
determining a first loss value in the $k^{th}$ round based on the first real palmprint picture and the first palmprint picture generated in the $k^{th}$ round;
determining a target loss value in the $k^{th}$ round, based on the first loss value in the $k^{th}$ round; and
adjusting a parameter in the palmprint picture generator obtained after the $(k-1)^{th}$ round of training when the target loss value in the $k^{th}$ round does not satisfy the convergence condition, to obtain a palmprint picture generator obtained after the $k^{th}$ round of training.

10. The method according to claim 9, further comprising:

discriminating, through a trained discriminator, between the first real palmprint picture used in the $k^{th}$ round and the first palmprint picture generated in the $k^{th}$ round, to obtain a first discrimination result in the $k^{th}$ round;
determining a second loss value in the $k^{th}$ round based on the first discrimination result in the $k^{th}$ round;
the determining a target loss value in the $k^{th}$ round, based on the first loss value in the $k^{th}$ round comprises:
determining the target loss value in the $k^{th}$ round based on the first loss value in the $k^{th}$ round and the second loss value in the $k^{th}$ round.

11. The method according to claim 10, further comprising:

inputting an intermediate noise vector in the $k^{th}$ round and the first simulated palmprint sample picture used in the $k^{th}$ round into the palmprint picture generator obtained after the $(k-1)^{th}$ round of training, to obtain a second palmprint picture in the $k^{th}$ round; and
determining a third loss value in the $k^{th}$ round based on the first palmprint picture in the $k^{th}$ round and the second palmprint picture in the $k^{th}$ round; and
the determining the target loss value in the $k^{th}$ round based on the first loss value in the $k^{th}$ round and the second loss value in the $k^{th}$ round comprises:
determining the target loss value in the $k^{th}$ round based on the first loss value in the $k^{th}$ round, the second loss value in the $k^{th}$ round, and the third loss value in the $k^{th}$ round.

12. The method according to claim 11, further comprising:

determining a fourth loss value in the $k^{th}$ round based on the intermediate noise vector in the $k^{th}$ round and the picture representation vector in the $k^{th}$ round; and
the determining the target loss value in the $k^{th}$ round based on the first loss value in the $k^{th}$ round, the second loss value in the k<sup>th</sup> round, and the third loss value in the k<sup>th</sup> round comprises:

determining the target loss value in the $k^{th}$ round based on the first loss value in the $k^{th}$ round, the second loss value in the $k^{th}$ round, the third loss value in the $k^{th}$ round, and the fourth loss value in the $k^{th}$ round.

13. The method according to claim 12, further comprising:

discriminating, through the trained discriminator, between a second real palmprint picture used in the $k^{th}$ round and the second palmprint picture generated in the $k^{th}$ round, to obtain a second discrimination result in the $k^{th}$ round;

determining a fifth loss value in the $k^{th}$ round based on the second discrimination result in the $k^{th}$ round;

the determining the target loss value in the $k^{th}$ round based on the first loss value in the $k^{th}$ round, the second loss value in the $k^{th}$ round, the third loss value in the $k^{th}$ round, and the fourth loss value in the $k^{th}$ round comprises:

determining the target loss value in the $k^{th}$ round, based on the first loss value in the $k^{th}$ round, the second loss value in the $k^{th}$ round, the third loss value in the $k^{th}$ round, the fourth loss value in the $k^{th}$ round, and the fifth loss value in the $k^{th}$ round.

14. The method according to any one of claims 1 to 7, further comprising:
training an initial palmprint picture matching model by using a set of palmprint pictures, to obtain a target palmprint picture matching model,

the set of palmprint pictures comprising the target palmprint picture; and
the target palmprint picture matching model being configured to extract features of an input palmprint picture.

15. The method according to any one of claims 1 to 7, further comprising:

combining Bézier sub-curves to obtain the simulated palmprint curve; and
generating the simulated palmprint picture comprising the simulated palmprint curve.

16. A palmprint picture generation apparatus, comprising:

an obtaining unit, configured to obtain a simulated palmprint picture, the simulated palmprint picture comprising a simulated palmprint curve obtained by combining sub-curves each of a pre-defined type;
an input unit, configured to input the simulated palmprint picture and a pre-set noise vector into a trained palmprint picture generator to sequentially perform a plurality of downsampling operations and a plurality of upsampling operations, to generate a target palmprint picture, wherein

the plurality of downsampling operations each comprise: a downsampling processing on an input picture representation vector to obtain a downsampled picture representation vector, followed by a noise addition processing on the downsampled picture representation vector by using the pre-set noise vector, to obtain an output picture representation vector; and
the plurality of upsampling operations each comprise: an upsampling processing on an input picture representation vector to obtain an upsampled picture representation vector, and followed by a noise addition processing on the upsampled picture representation vector by using the pre-set noise vector, to obtain an output picture representation vector.

17. A computer-readable storage medium, comprising a stored program, the program, when being run, performing the method according to any one of claims 1 to 15.

18. A computer program product, comprising a computer program/instruction, the computer program/instruction, when executed by a processor, implementing the operations of the method according to any one of claims 1 to 15.

19. An electronic device, comprising a memory and a processor, the memory having a computer program stored therein, and the processor being configured to perform the method according to any one of claims 1 to 15 through the computer program.

FIG. 1

FIG. 2

Obtain a simulated palmprint picture, the simulated palmprint picture including a simulated palmprint curve obtained by combining sub-curves each of a pre-defined type

S12

Input the simulated palmprint picture and a pre-set noise vector into a trained palmprint picture generator to sequentially perform a plurality of downsampling operations and a plurality of upsampling operations, to generate a target palmprint picture, wherein the plurality of downsampling operations each include: a downsampling processing on an input picture representation vector to obtain a downsampled picture representation vector, followed by a noise addition processing on the downsampled picture representation vector by using the pre-set noise vector, to obtain an output picture representation vector; and the plurality of upsampling operations each include: an upsampling processing on an input picture representation vector to obtain an upsampled picture representation vector, and followed by a noise addition processing on the upsampled picture representation vector by using the pre-set noise vector, to obtain an output picture representation vector

S14

## FIG. 3

401

**Initial picture representation vector**

202

First noise vector

**Downsampling module 1**

**Downsampling submodule 1**

**First conditional generation submodule 1**

206

201 204

Simulated palmprint picture

Input picture representation vector

Downsampling processing

205 Noise addition processing

Downsampled picture representation vector

207

Noise-added picture representation vector

Structure and processing flow of the downsampling module 1

202

**First noise vector**

201

**Simulated palmprint picture**

**Target palmprint picture generator**

P(3) downsampling modules

**Downsampling module 1**

Downsampling module 2

Downsampling module 3

402

**P(3)ᵗʰ noise-added picture representation vector**

Q(2) downsampling modules

208

**Target palmprint picture**

Upsampling module 2

Upsampling module 1

403

**Q(2)ᵗʰ noise-added picture representation vector**

## FIG. 4

**Downsampling module 2**

**Downsampling submodule 2**

**First conditional generation submodule 2**

202 — First noise vector

206 — Noise addition processing

Downsampling processing

501 — Input picture representation vector of an i(2)$^{th}$ downsampling module

502 — i(2)$^{th}$ downsampled picture representation vector

503 — i(2)$^{th}$ noise-added picture representation vector

202 — First noise vector

201 — Simulated palmprint picture

**Target palmprint picture generator**

**Downsampling module 1** → Downsampling module 2 → Downsampling module 3

P(3) downsampling modules

Q(2) downsampling modules

208 — Target palmprint picture

Upsampling module 2 ← Upsampling module 1

## FIG. 5

**Downsampling module 2**

**Downsampling submodule 2**

**First conditional generation submodule 2**

202 — First noise vector

206 — Noise addition processing

601 — First group of FC layers

602 — Second group of FC layers

603 — First control vector

604 — Second control vector

Downsampling processing

501 — Input picture representation vector of an i(2)$^{th}$ downsampling module

502 — i(2)$^{th}$ downsampled picture representation vector

503 — i(2)$^{th}$ noise-added picture representation vector

## FIG. 6

N(z) — 704

8

128 — FC1

128 — FC2

FC3    FC4

703 — Noise vector

701 — i$^{th}$ downsampled picture representation vector

⊗    ⊕

CAdaIN

702 — i$^{th}$ noise-added picture representation vector

## FIG. 7

202

**First noise vector**

**Target palmprint picture generator**

201

**Simulated palmprint picture**

**Downsampling module 1**

Downsampling module 2

Downsampling module 3

P(3) downsampling modules

208

**Target palmprint picture**

Upsampling module 2

Upsampling module 1

Q(2) downsampling modules

**Upsampling module 1**

**Upsampling submodule 1**

**Second conditional generation submodule 1**

202

**First noise vector**

Noise addition processing

801

Input picture representation vector of a $j(1)^{th}$ upsampling module

Upsampling processing

802

$j(1)^{th}$ upsampled picture representation vector

803

$j(1)^{th}$ noise-added picture representation vector

## FIG. 8

**Upsampling module 1**

**Upsampling submodule 1**

**Second conditional generation submodule 1**

202

**First noise vector**

Noise addition processing

901

Third group of FC layers

902

Fourth group of FC layers

903

Third control vector

904

Fourth control vector

801

Input picture representation vector of a $j(1)^{th}$ upsampling module

Upsampling processing

802

$j(1)^{th}$ upsampled picture representation vector

803

$j(1)^{th}$ noise-added picture representation vector

## FIG. 9

1003

1001

**First convolution processing**

Initial picture representation vector

Downsampling module 1

Downsampling submodule 1

First conditional generation submodule 1

First noise vector

Noise addition processing

1002

Simulated palmprint picture

Input picture representation vector

Downsampling processing

Downsampled picture representation vector

Noise-added picture representation vector

Structure and processing flow of the downsampling module 1

First noise vector

Target palmprint picture generator

Simulated palmprint picture

Downsampling module 1

Downsampling module 2

Downsampling module 3

P(3)$^{th}$ noise-added picture representation vector

1006

Target palmprint picture

Upsampling module 2

Upsampling module 1

1004

1005

Q(2)$^{th}$ noise-added picture representation vector

**Second convolution processing**

FIG. 10

| A group of simulated palmprint sample pictures | A group of first real palmprint pictures |
|---|---|
| Simulated palmprint sample picture 1 | First real palmprint picture 1 |
| Simulated palmprint sample picture 2 | First real palmprint picture 2 |
| Simulated palmprint sample picture 3 | First real palmprint picture 3 |

Simulated palmprint sample picture 1

First real palmprint picture 1

Initial palmprint picture generator

$(k-1)^{th}$ round of training

Palmprint picture generator determined in the $(k-1)^{th}$ round of training

$(k)^{th}$ round of training

Adjust a parameter

To-be-adjusted palmprint picture generator

No

Does a target loss value satisfy a pre-set convergence condition?

Yes

Target palmprint picture generator

FIG. 11

Perform a k<sup>th</sup> round of training on an initial palmprint picture generator

| Icon | Meaning |
|------|---------|
| B | First real palmprint picture used in the $k^{th}$ round |
| $Q\,(z|B)$ | Input picture representation vector in the $k^{th}$ round |
| A | First simulated palmprint sample picture used in the $k^{th}$ round |
| G | Palmprint picture generator determined in the $(k-1)^{th}$ round of training |
| B' | First palmprint picture generated in the $k^{th}$ round |
| L1 | First loss value in the $k^{th}$ round |
| E | Encoder |

FIG. 12

Perform a k$^{th}$ round of training on an initial palmprint picture generator

B → E → $\overline{Q}$ (z|B)

Unpaired

A

G → B'

L1 → D → LD1

| Icon | Meaning |
|---|---|
| B | First real palmprint picture used in the k$^{th}$ round |
| $\overline{Q}$ (z\|B) | Input picture representation vector in the k$^{th}$ round |
| A | First simulated palmprint sample picture used in the k$^{th}$ round |
| G | Palmprint picture generator determined in the (k–1)$^{th}$ round of training |
| B' | First palmprint picture generated in the k$^{th}$ round |
| L1 | First loss value in the k$^{th}$ round |
| D | Trained discriminator |
| LD1 | Second loss value in the k$^{th}$ round |
| E | Encoder |

FIG. 13

| Icon | Meaning | Icon | Meaning |
|------|---------|------|---------|
| B | First real palmprint picture used in the $k^{th}$ round | $N(z)$ | **Intermediate noise vector in the $k^{th}$ round** |
| $Q(z\|B)$ | Input picture representation vector in the $k^{th}$ round | B" | **Second palmprint picture generated in the $k^{th}$ round** |
| A | First simulated palmprint sample picture used in the $k^{th}$ round | LID | **Third loss value in the $k^{th}$ round** |
| G | Palmprint picture generator determined in the $(k–1)^{th}$ round of training | | |
| B' | First palmprint picture generated in the $k^{th}$ round | | |
| L1 | First loss value in the $k^{th}$ round | | |
| D | Trained discriminator | | |
| LD1 | Second loss value in the $k^{th}$ round | | |
| E | Encoder | | |

FIG. 14

N (z)

LKL

L1

D

LD1

B

E

Q (z|B)

Unpaired

G

B'

A

Palmprint
recognition
model

LID

G

B"

N (z)

| Icon | Meaning | Icon | Meaning |
|------|---------|------|---------|
| B | First real palmprint picture used in the k$^{th}$ round | $\overline{N}$ (z) | Intermediate noise vector in the k$^{th}$ round |
| $\overline{Q}$ (z|B) | Input picture representation vector in the k$^{th}$ round | B" | Second palmprint picture generated in the k$^{th}$ round |
| A | First simulated palmprint sample picture used in the k$^{th}$ round | LID | Third loss value in the k$^{th}$ round |
| G | Palmprint picture generator determined in the (k–1)$^{th}$ round of training | LKL | **Fourth loss value in the k$^{th}$ round** |
| B' | First palmprint picture generated in the k$^{th}$ round | | |
| L1 | First loss value in the k$^{th}$ round | | |
| D | Trained discriminator | | |
| LD1 | Second loss value in the k$^{th}$ round | | |
| E | Encoder | | |

FIG. 15

| Icon | Meaning | Icon | Meaning |
|------|---------|------|---------|
| B | First real palmprint picture used in the $k^{th}$ round | $N(z)$ | Intermediate noise vector in the $k^{th}$ round |
| $\overline{Q}(z\|B)$ | Input picture representation vector in the $k^{th}$ round | B" | Second palmprint picture generated in the $k^{th}$ round |
| A | First simulated palmprint sample picture used in the $k^{th}$ round | LID | Third loss value in the $k^{th}$ round |
| G | Palmprint picture generator determined in the $(k–1)^{th}$ round of training | LKL | Fourth loss value in the $k^{th}$ round |
| B' | First palmprint picture generated in the $k^{th}$ round | C | **Second real palmprint picture used in the $k^{th}$ round** |
| L1 | First loss value in the $k^{th}$ round | LD2 | **Fifth loss value in the $k^{th}$ round** |
| D | Trained discriminator | | |
| LD1 | Second loss value in the $k^{th}$ round | | |
| E | Encoder | | |

FIG. 16

**Diversity generation module 1701**

**ID consistency constraint module 1702**

| Icon | Meaning | Icon | Meaning |
|------|---------|------|---------|
| B | First real palmprint picture used in the $k^{th}$ round | $N(z)$ | Intermediate noise vector in the $k^{th}$ round |
| $Q(z|B)$ | Input picture representation vector in the $k^{th}$ round | B" | Second palmprint picture generated in the $k^{th}$ round |
| A | First simulated palmprint sample picture used in the $k^{th}$ round | LID | Third loss value in the $k^{th}$ round |
| G | Palmprint picture generator determined in the $(k-1)^{th}$ round of training | LKL | Fourth loss value in the $k^{th}$ round |
| B' | First palmprint picture generated in the $k^{th}$ round | C | **Second real palmprint picture used in the $k^{th}$ round** |
| L1 | First loss value in the $k^{th}$ round | LD2 | **Fifth loss value in the $k^{th}$ round** |
| D | Trained discriminator | | |
| LD1 | Second loss value in the $k^{th}$ round | | |
| E | Encoder | | |

FIG. 17

FIG. 18

FIG. 19

Target palmprint
picture 1

Target palmprint
picture 2

...

Simulated
palmprint picture 1

Simulated
palmprint picture 2

Simulated
palmprint picture 3

Simulated
palmprint picture 4

FIG. 20

Obtaining unit 2002

Input unit 2004

Palmprint picture
generation apparatus

FIG. 21

2108

Display

2110

2106

Transmission apparatus

2104

Processor

Memory

Obtaining unit 2002

Input unit 2004

2102

FIG. 22

2200

CPU 2201

ROM 2202

RAM 2203

2204

2205

I/O interface

2206
Input part

2207
Output part

2208
Storage part

2209
Communication part

2210
Drive

2211
Removable medium

FIG. 23

## INTERNATIONAL SEARCH REPORT

| International application No. |
|---|
| **PCT/CN2024/092752** |

| A. | CLASSIFICATION OF SUBJECT MATTER |
|---|---|

G06T 11/00(2006.01)i; G06V 10/74(2022.01)i

According to International Patent Classification (IPC) or to both national classification and IPC

| B. | FIELDS SEARCHED |
|---|---|

Minimum documentation searched (classification system followed by classification symbols)

IPC: G06T, G06V

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 掌纹, 图像, 图片, 曲线, 模拟, 样本, 噪声, 生成, 采样, palm 1w print, image, curve, simulation, sample, noise, generation, sample

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 117218218 A (TENCENT TECHNOLOGY (SHENZHEN) CO., LTD.) 12 December 2023 (2023-12-12) claims 1-19, and description, paragraphs [0005]-[0065] | 1-19 |
| A | CN 116168269 A (ALIPAY (HANGZHOU) INFORMATION TECHNOLOGY CO., LTD.) 26 May 2023 (2023-05-26) description, paragraphs [0052]-[0102] | 1-19 |
| A | CN 115527079 A (TENCENT TECHNOLOGY (SHENZHEN) CO., LTD.) 27 December 2022 (2022-12-27) entire document | 1-19 |
| A | US 2022398834 A1 (BEIJING BAIDU NETCOM SCIENCE TECHNOLOGY CO., LTD. et al.) 15 December 2022 (2022-12-15) entire document | 1-19 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **02 July 2024** | **08 July 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/092752**

| Patent document cited in search report | | | Publication date (day/month/year) | Patent family member(s) | | | Publication date (day/month/year) |
|---|---|---|---|---|---|---|---|
| CN | 117218218 | A | 12 December 2023 | None | | | |
| CN | 116168269 | A | 26 May 2023 | None | | | |
| CN | 115527079 | A | 27 December 2022 | HK | 40080401 | A0 | 05 May 2023 |
| | | | | WO | 2023160048 | A1 | 31 August 2023 |
| | | | | US | 2023394869 | A1 | 07 December 2023 |
| US | 2022398834 | A1 | 15 December 2022 | None | | | |

Form PCT/ISA/210 (patent family annex) (July 2022)

**EP 4 648 012 A1**

**Patent documents cited in the description**

- CN 2023107446120